# EUROPEAN PATENT APPLICATION

(11) **EP 4 746 157 A1**
(43) Date of publication of application: **20.05.2026**
(21) Application number: 23950250.3
(22) Date of filing: 31.08.2023
(51) Int. Cl.: H01M 50/271, H01M 50/20, H01M 50/204

(54) **BATTERY AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2023/116350
(87) International publication number: WO 2025/043670

(57) **Abstract**

A battery (100) and an electric device are provided. The battery (100) includes a battery case (10) and a cell assembly (20). The battery case (10) includes a case cover (11) and a frame (12), where the case cover (11) is disposed on the frame (12) and encloses with the frame (12) to form an accommodating cavity (13), the case cover (11) is configured to be connected to an external frame body, the cell assembly (20) is accommodated in the accommodating cavity (13), and the cell assembly (20) is connected to the case cover (11).

## Description

### TECHNICAL FIELD

The present application pertains to the field of battery technology, and more specifically, relates to a battery and an electric device.

### BACKGROUND

With the rapid development of new energy technology, electric vehicles are increasingly favored by people. An electric vehicle is a vehicle that relies entirely or partially on electric energy provided by a battery as a power source.

Currently, due to the large weight of batteries and their low mass energy density, the range performance of electric vehicles is reduced, which is not conducive to the widespread adoption of electric vehicles. Therefore, how to reduce the weight of batteries is a technical problem that urgently needs to be addressed.

### SUMMARY

An objective of embodiments of the present application is to provide a battery and an electric device to address the technical problem of the large weight of batteries in the related art.

To achieve the above objective, the technical solution adopted by the embodiments of the present application is: providing a battery including a battery case and a cell assembly, where the battery case includes a case cover and a frame, the case cover is disposed on the frame and encloses with the frame to form an accommodating cavity, the case cover is configured to be connected to an external frame body, the cell assembly is accommodated in the accommodating cavity, and the cell assembly is connected to the case cover.

The battery provided in this embodiment of the present application has at least the following beneficial effects: the case cover of the battery case in the battery provided in this embodiment of the present application can be connected to an external frame body, and the cell assembly of the battery is connected to the case cover. Thus, at least a portion of the load of the cell assembly can be directly transferred to the external frame body through the case cover, in other words, the external frame body can bear at least a portion of the load of the cell assembly, reducing the load borne by the frame of the battery case. This can reduce the strength requirements for the frame, allowing for a reduction in the dimension of the frame, such as reducing the height dimension of the frame, thereby effectively reducing the weight of the battery, increasing the mass energy density of the battery, and thus effectively improving the range performance of the electric device.

In some embodiments of the present application, the case cover has a first cavity, the frame has a second cavity, the first cavity and the second cavity are interconnected to form the accommodating cavity, and at least a portion of the cell assembly is accommodated in the first cavity.

By adopting the above technical solution, at least a portion of the cell assembly can be accommodated in the first cavity, effectively reducing the depth requirement for the second cavity. This can reduce the depth of the second cavity by reducing the height dimension of the frame, thereby further reducing the weight of the battery, further increasing the mass energy density of the battery, and thus further improving the range performance of the electric device.

In some embodiments of the present application, a maximum depth of the second cavity is less than a maximum depth of the first cavity; and/or a minimum depth of the second cavity is less than a maximum depth of the first cavity.

By adopting the above technical solution, a greater volume of the cell assembly can be accommodated in the first cavity, further reducing the depth requirement for the second cavity, allowing for a further reduction in the height dimension of the frame, thereby further reducing the weight of the frame and the total weight of the battery, further increasing the mass energy density of the battery, and thus further improving the range performance of the electric device.

In some embodiments of the present application, the frame includes a first support beam, and the first support beam includes a support beam body and an energy-absorbing beam body, where the energy-absorbing beam body is connected to a side of the support beam body facing away from the accommodating cavity.

By adopting the above technical solution, under the condition of an external force impact on the outer side of the battery, the energy-absorbing beam body can effectively absorb the impact energy, thereby effectively mitigating the transfer of impact energy to the cell assembly through the frame, and effectively reducing the risk of damage to the cell assembly.

In some embodiments of the present application, the energy-absorbing beam body includes a main beam body, where the main beam body is connected to a side of the support beam body facing away from the accommodating cavity and has a first energy-absorbing cavity.

By adopting the above technical solution, under the condition of an external force impact on the outer side of the battery, the main beam body can collapse inward and deform, thereby effectively absorbing the impact energy.

In some embodiments of the present application, the energy-absorbing beam body further includes a first energy-absorbing body, where the first energy-absorbing body is disposed in the first energy-absorbing cavity.

By adopting the above technical solution, under the condition of an external force impact on the outer side of the battery, the impact energy can be transferred to the first energy-absorbing body through the main beam body, causing the main beam body and the first energy-absorbing body to deform sequentially, thereby enabling the energy-absorbing beam body to more effectively absorb the impact energy, and further reducing the risk of damage to the cell assembly.

In some embodiments of the present application, the first energy-absorbing body is an energy-absorbing rib and extends along a length direction of the main beam body, and the first energy-absorbing body is connected between two opposite walls of the main beam body.

By adopting the above technical solution, the impact energy can be more effectively absorbed, thereby further reducing the risk of damage to the cell assembly.

In some embodiments of the present application, the first support beam extends along a length direction of the battery and is located on one side of the battery along a width direction of the battery.

By adopting the above technical solution, under the condition of an external force impact on one side of the battery along the width direction, the energy-absorbing beam body can effectively absorb the impact energy, thereby reducing the risk of damage to the cell assembly.

In some embodiments of the present application, the battery case further includes a guard plate covering a side of the frame facing away from the case cover, and the guard plate has a second energy-absorbing cavity.

By adopting the above technical solution, under the condition of an external force impact on the bottom of the battery, the guard plate can collapse inward and deform to absorb the impact energy, thereby effectively mitigating the transfer of impact energy to the cell assembly, and effectively reducing the risk of damage to the cell assembly.

In some embodiments of the present application, the guard plate includes a first plate, a second plate, and a second energy-absorbing body, where the first plate and the second plate are spaced apart along a height direction of the battery to form the second energy-absorbing cavity, and the second energy-absorbing body is disposed in the second energy-absorbing cavity.

By adopting the above technical solution, under the condition of an external force impact on the bottom of the battery, the impact energy can be transferred to the second energy-absorbing body, causing the second energy-absorbing body to deform, thereby enabling the guard plate to more effectively absorb the impact energy, and further reducing the risk of damage to the cell assembly.

In some embodiments of the present application, the second energy-absorbing body is an energy-absorbing rib, and the second energy-absorbing body is connected between the first plate and the second plate.

By adopting the above technical solution, the impact energy can be more effectively absorbed, thereby further reducing the risk of damage to the cell assembly.

In some embodiments of the present application, a thickness direction of the second energy-absorbing body is inclined relative to a height direction of the battery.

By adopting the above technical solution, the second energy-absorbing body can quickly collapse and deform under an external force impact, thereby more effectively absorbing the impact energy, and further reducing the risk of damage to the cell assembly.

In some embodiments of the present application, the number of second energy-absorbing bodies is multiple, the multiple second energy-absorbing bodies are arranged in parallel along a direction perpendicular to a length direction of the second energy-absorbing body, and thickness directions of two adjacent second energy-absorbing bodies are inclined in different directions relative to the height direction of the battery.

By adopting the above technical solution, under the condition of an external force impact on the guard plate, at least a portion of the impact energy received by two adjacent second energy-absorbing bodies can offset each other, thereby effectively improving the impact resistance of the guard plate, and further reducing the risk of damage to the cell assembly.

In some embodiments of the present application, the second energy-absorbing body extends along a width direction of the battery.

By adopting the above technical solution, the impact resistance of the guard plate in the width direction of the battery is effectively improved, so that under the condition of an external force impact on one side of the battery along the width direction, the guard plate can effectively withstand the impact energy, thereby effectively reducing the risk of damage to the cell assembly.

In some embodiments of the present application, in a direction perpendicular to a length direction of the first support beam, at least a portion of the energy-absorbing beam body protrudes beyond the guard plate.

By adopting the above technical solution, under the condition of an external force impact on the battery, the energy-absorbing beam body can first absorb the impact energy, thereby effectively reducing the risk of the impact energy being transferred to the guard plate.

In some embodiments of the present application, the battery case further includes a guard plate, and the guard plate covers a side of the frame facing away from the case cover.

By adopting the above technical solution, under the condition of an external force impact on the bottom of the battery, the guard plate can effectively absorb the impact energy, thereby reducing the risk of damage to the cell assembly.

In some embodiments of the present application, the cell assembly is connected to the guard plate.

By adopting the above technical solution, the cell assembly can be connected between the case cover and the guard plate, thereby mitigating the shaking of the cell assembly, and effectively improving the reliability of the battery.

In some embodiments of the present application, the battery case further includes a sealing member, where the sealing member is disposed between the frame and the guard plate.

By adopting the above technical solution, the sealing performance of the battery is effectively improved, thereby effectively enhancing the safety of the battery.

In some embodiments of the present application, the battery further includes a first thermal management component, where the first thermal management component is disposed between the cell assembly and the guard plate and is attached to the cell assembly.

By adopting the above technical solution, the heat exchange performance of the battery is effectively improved, thereby effectively enhancing the safety of the battery.

In some embodiments of the present application, the frame is configured to be connected to the external frame body.

By adopting the above technical solution, the connection stress between the frame and the case cover is effectively reduced, thereby effectively reducing the risk of fracture at the connection portion between the frame and the case cover.

In some embodiments of the present application, the battery case further includes a mounting assembly, where the case cover is connected to the mounting assembly, and the mounting assembly is configured to be connected to the external frame body.

The adoption of the above technical solution facilitates the connection of the case cover to the external frame body.

In some embodiments of the present application, at least a portion of the mounting assembly includes a support member and a first connecting member, where the support member is connected to the case cover, and the first connecting member is connected to the support member and configured to be connected to the external frame body.

The adoption of the above technical solution facilitates the connection of the case cover to the external frame body.

In some embodiments of the present application, the case cover includes an upper wall, where the cell assembly is connected to a lower portion of the upper wall, the support member is connected to the upper wall, and the first connecting member connects the support member and the upper wall to the external frame body.

By adopting the above technical solution, the strength of the upper wall of the case cover is effectively improved, thereby effectively enhancing the load-bearing capacity of the upper wall of the case cover for the cell assembly.

In some embodiments of the present application, the support member is connected to an upper portion of the upper wall and extends along a width direction of the battery.

By adopting the above technical solution, the impact resistance of the upper wall of the case cover in the width direction of the battery is effectively improved, effectively reducing the risk of deformation of the case cover when it is subjected to an external force impact on one side along the width direction of the battery, thereby effectively reducing the risk of damage to the cell assembly.

In some embodiments of the present application, the battery case further includes a constraining structure disposed on the case cover, where the constraining structure is configured to constrain swelling of the cell assembly.

By adopting the above technical solution, under the constraining action of the constraining structure, the swelling force of the cell assembly can be resisted, thereby limiting the swelling deformation of the cell assembly, and effectively improving the safety performance of the battery.

In some embodiments of the present application, the constraining structure includes two beam structures spaced apart, where the two beam structures cooperate to clamp the cell assembly.

By adopting the above technical solution, under the clamping action of the two beam structures, the swelling force of the cell assembly can be resisted, thereby limiting the swelling deformation of the cell assembly, and effectively improving the safety performance of the battery.

In some embodiments of the present application, the case cover includes an upper wall and a side wall, where the beam structure extends along a width direction of the battery, and the beam structure is connected to at least one of the upper wall and the side wall.

By adopting the above technical solution, the installation operation of the beam structure is facilitated, enabling the two beam structures to more effectively clamp the cell assembly. Moreover, the impact resistance of the case cover in the width direction of the battery can be improved, allowing the case cover to effectively withstand the impact force when subjected to an external force impact on one side along the width direction of the battery. This effectively reduces the risk of deformation of the case cover, thereby effectively reducing the risk of damage to the cell assembly.

In some embodiments of the present application, the beam structure includes an adapter and a beam body, where the adapter includes a matching portion and an installation portion connected to each other, the matching portion is shape-fitted and connected to at least a portion of an inner wall surface of the side wall, and the beam body is connected to the installation portion.

By adopting the above technical solution, by connecting the matching portion to at least a portion of the inner wall surface of the side wall, and installing the beam body on the installation portion of the adapter, the beam body can be connected to the side wall through the adapter, effectively improving the connection strength between the beam body and the case cover, thereby effectively reducing the risk of deformation or displacement of the beam body, and effectively improving the reliability of the battery.

In some embodiments of the present application, the constraining structure further includes a second connecting member, where the second connecting member is connected between two beam structures.

By adopting the above technical solution, the relative positions of two adjacent beam structures are effectively restricted, thereby further reducing the risk of deformation or displacement of the beam structures.

In some embodiments of the present application, the second connecting member is connected to a side of the beam structure facing away from the case cover.

By adopting the above technical solution, the risk of interference between the second connecting member and the cell assembly is effectively reduced, facilitating the connection of the second connecting member to the beam structure.

In some embodiments of the present application, the cell assembly includes multiple battery cells, and the battery further includes a second thermal management component, where the second thermal management component is attached between two adjacent battery cells; and/or the battery further includes a third thermal management component, where the third thermal management component is disposed between the cell assembly and the case cover and attached to the cell assembly.

By adopting the above technical solution, the heat exchange performance of the battery is effectively improved, thereby effectively enhancing the safety of the battery.

In some embodiments of the present application, the cell assembly is bonded to the case cover.

By adopting the above technical solution, the force between the cell assembly and the case cover can become more uniform, and the assembly process of the cell assembly and the case cover can also be simplified, thereby effectively improving the assembly efficiency of the battery.

An embodiment of the present application further provides an electric device including a frame body and the battery described in any one of the above embodiments, where the case cover is connected to the frame body.

The electric device provided in this embodiment of the present application has at least the following beneficial effects: as the electric device provided in this embodiment of the present application adopts the battery described in any one of the above embodiments, the range performance of the electric device is effectively improved.

### BRIEF DESCRIPTION OF DRAWINGS

To more clearly illustrate the technical solutions in the embodiments of the present application, the accompanying drawings used in the description of the embodiments or the prior art are briefly introduced below. It is apparent that the accompanying drawings described below are merely some embodiments of the present application, and those of ordinary skill in the art can obtain other drawings based on these drawings without creative effort.
FIG. 1 is a schematic structural diagram of a vehicle according to an embodiment of the present application;
FIG. 2 is a schematic structural diagram of a battery according to an embodiment of the present application;
FIG. 3 is a schematic exploded structural view of the battery shown in FIG. 2;
FIG. 4 is a first schematic exploded structural view of a case cover, constraining structure, and mounting assembly in the battery shown in FIG. 2;
FIG. 5 is a second schematic exploded structural view of a case cover, constraining structure, and mounting assembly in the battery shown in FIG. 2;
FIG. 6 is a schematic structural diagram of a guard plate in the battery shown in FIG. 3;
FIG. 7 is a schematic front view structural view of the guard plate shown in FIG. 6;
FIG. 8 is an enlarged schematic structural diagram of portion B of the guard plate shown in FIG. 7;
FIG. 9 is a schematic cross-sectional structural view of the battery shown in FIG. 2 along line A-A direction;
FIG. 10 is an enlarged schematic structural diagram of portion C of the battery shown in FIG. 9;
FIG. 11 is a schematic exploded structural view of a battery according to another embodiment of the present application;
FIG. 12 is a schematic exploded structural view of a battery according to yet another embodiment of the present application;
FIG. 13 is a schematic structural diagram of a battery cell according to an embodiment of the present application;
FIG. 14 is a schematic top view structural view of the battery cell shown in FIG. 13; and

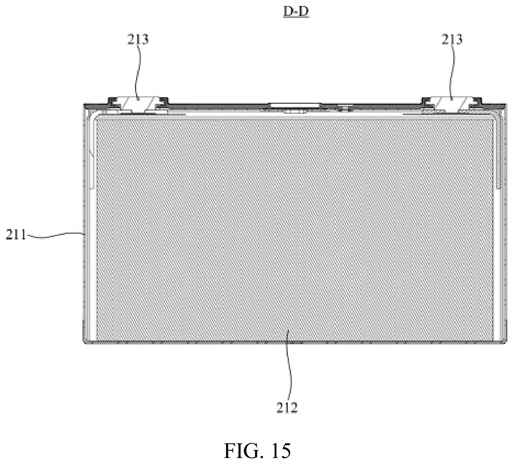

FIG. 15 is a schematic cross-sectional structural view of the battery cell shown in FIG. 14 along line D-D direction.

### Description of reference signs:

1000: vehicle;
100: battery; 10: battery case; 11: case cover; 111: first cavity; 112: upper wall; 113: side wall; 12: frame; 121: second cavity; 122: first support beam; 1221: support beam body; 1222: energy-absorbing beam body; 12221: main beam body; 12222: first energy-absorbing body; 12223: first energy-absorbing cavity; 123: second support beam; 13: accommodating cavity; 14: guard plate; 141: second energy-absorbing cavity; 142: first plate; 143: second plate; 144: second energy-absorbing body; 15: sealing member; 16: mounting assembly; 161: support member; 162: first connecting member; 17: constraining structure; 171: beam structure; 1711: adapter; 1711a: first adapter; 1711b: second adapter; 17111: matching portion; 17111a: first matching portion; 17111b: second matching portion; 17112: installation portion; 1712: beam body; 1713: first fastener; 172: second connecting member; 173: second fastener; 18: connection sleeve; 20: cell assembly; 21: battery cell; 211: shell; 212: electrode assembly; 213: electrode terminal; 30: first thermal management component; 40: second thermal management component; 50: third thermal management component;
200: vehicle frame;
300: electric drive device; and
400: wheel.

### DESCRIPTION OF EMBODIMENTS

To make the technical problems, technical solutions, and beneficial effects to be addressed by the present application clearer, the present application is further described in detail below with reference to the accompanying drawings and embodiments. It should be understood that the specific embodiments described here are merely used to explain the present application and are not intended to limit the present application.

It should be noted that when an element is referred to as being "fixed to" or "disposed on" another element, it may be directly on the other element or indirectly on the other element. When an element is referred to as being "connected to" another element, it may be directly connected to the other element or indirectly connected to the another element.

It should be understood that the terms "length", "width", "upper", "lower", "front", "rear", "left", "right", "vertical", "horizontal", "top", "bottom", "inner", "outer", and the like indicate orientations or positional relationships based on the orientations or positional relationships shown in the accompanying drawings, and are merely for convenience of describing the present application and simplifying the description, not indicating or implying that the referred device or element must have a specific orientation, be constructed or operated in a specific orientation, and thus should not be construed as limiting the present application.

In addition, the terms "first" and "second" are used only for descriptive purposes and should not be understood as indicating or implying relative importance or implicitly indicating the number of technical features indicated. Thus, a feature defined with "first" or "second" may explicitly or implicitly include one or more of such features. In the description of the present application, "multiple" means two or more, unless otherwise explicitly specified.

An electric vehicle refers to a vehicle that relies entirely or partially on electric energy as a power source. An electric vehicle includes a vehicle frame, a battery, and an electric drive device, where the battery is typically installed at the bottom of the vehicle frame, and the electric drive device is typically installed at the front or rear of the vehicle frame. The battery is configured to provide electric energy to the electric drive device, and the electric drive device is configured to convert the electric energy into mechanical energy to drive the electric vehicle.

In the related art, a battery includes a battery case and a cell assembly accommodated in the battery case, where the frame of the battery case is connected to the vehicle frame to support the entire battery. However, since the frame needs to bear the entire load of the battery, to enhance the load-bearing capacity of the frame, it is necessary to increase the overall dimension of the frame, especially the height dimension of the frame, but this leads to a significant increase in the weight of the battery, significantly decreasing the mass energy density of the battery, which is not conducive to improving the range performance of the electric vehicle.

To reduce the weight of the battery, the case cover of the battery case of the battery provided in this embodiment of the present application can be connected to the vehicle frame, and the cell assembly is connected to the case cover. Thus, at least a portion of the load of the cell assembly can be directly transferred to the vehicle frame through the case cover, in other words, the vehicle frame can bear at least a portion of the load of the cell assembly, reducing the load borne by the frame of the battery case. This can reduce the strength requirements for the frame, allowing for a reduction in the dimension of the frame, such as reducing the height dimension of the frame, thereby effectively reducing the weight of the battery, increasing the mass energy density of the battery, and thus effectively improving the range performance of the electric vehicle.

The battery provided in this embodiment of the present application can be applied to electric devices. The electric devices may be, but are not limited to, vehicles, portable devices, ships, spacecraft, electric toys, or electric tools. Vehicles may be fuel vehicles, gas vehicles, or electric vehicles, and electric vehicles may be battery electric vehicles, hybrid electric vehicles, or extended-range electric vehicles. Spacecraft include airplanes, rockets, space shuttles, spaceships, and the like. Electric toys include fixed or mobile electric toys, such as game consoles, electric car toys, electric ship toys, or electric airplane toys. Electric tools include metal cutting electric tools, grinding electric tools, assembly electric tools, and railway electric tools, such as electric drills, electric grinders, electric wrenches, electric screwdrivers, electric hammers, impact drills, concrete vibrators, or electric planers.

For convenience of description, the following embodiments take a vehicle as an example of an electric device according to an embodiment of the present application.

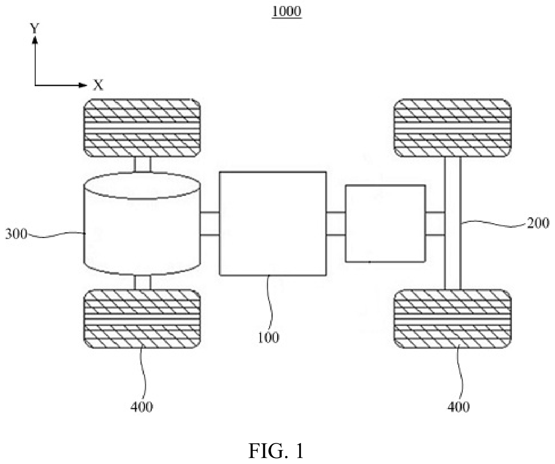

Referring to FIG. 1, FIG. 1 is a schematic structural diagram of a vehicle 1000 according to an embodiment of the present application. The vehicle 1000 includes a vehicle frame 200, a battery 100, and an electric drive device 300.

The vehicle frame 200 is the main support component of the vehicle 1000. The vehicle frame 200 has an engine compartment and a passenger compartment, where the engine compartment is configured to accommodate the electric drive device 300, transmission device, cooling device, and the like of the vehicle 1000, and the passenger compartment is configured to provide operational and seating space for the driver and passengers. When the vehicle 1000 is a front-wheel-drive vehicle, the engine compartment is disposed at the front of the vehicle frame 200, that is, a front engine compartment; when the vehicle 1000 is a rear-wheel-drive vehicle, the engine compartment is disposed at the rear of the vehicle frame 200, that is, a rear engine compartment; and when the vehicle 1000 is a four-wheel-drive vehicle, the engine compartment is divided into a front engine compartment and a rear engine compartment, with the front engine compartment disposed at the front of the vehicle frame 200 and the rear engine compartment disposed at the rear of the vehicle frame 200. The passenger compartment is disposed between the front and rear of the vehicle frame 200.

The battery 100 is configured to provide electric energy to the electric drive device 300, and the battery 100 may be disposed at the bottom of the vehicle frame 200, for example, the battery 100 is disposed below the passenger compartment of the vehicle frame 200.

The electric drive device 300 is configured to convert the electric energy provided by the battery 100 into mechanical energy and output the mechanical energy to the wheels 400 of the vehicle 1000 to drive the vehicle 1000. Of course, when the vehicle 1000 has a kinetic energy recovery function, the electric drive device 300 can also function as a generator to convert mechanical energy into electric energy and transfer the generated electric energy to be stored in the battery 100. The electric drive device 300 is installed in the engine compartment. Specifically, when the vehicle 1000 is a front-wheel-drive vehicle, the electric drive device 300 is installed at the front of the vehicle 1000 and is configured to output the mechanical energy to the front wheels 400 of the vehicle 1000 to drive the vehicle 1000; when the vehicle 1000 is a rear-wheel-drive vehicle, the electric drive device 300 is installed at the rear of the vehicle 1000 and is configured to output the mechanical energy to the rear wheels 400 of the vehicle 1000 to drive the vehicle 1000; and when the vehicle 1000 is a four-wheel-drive vehicle, there may be two electric drive devices 300, one electric drive device 300 installed at the front of the vehicle 1000 and configured to output the mechanical energy to the front wheels 400 of the vehicle 1000, and the other electric drive device 300 installed at the rear of the vehicle 1000 and configured to output the mechanical energy to the rear wheels 400 of the vehicle 1000 to drive the vehicle 1000.

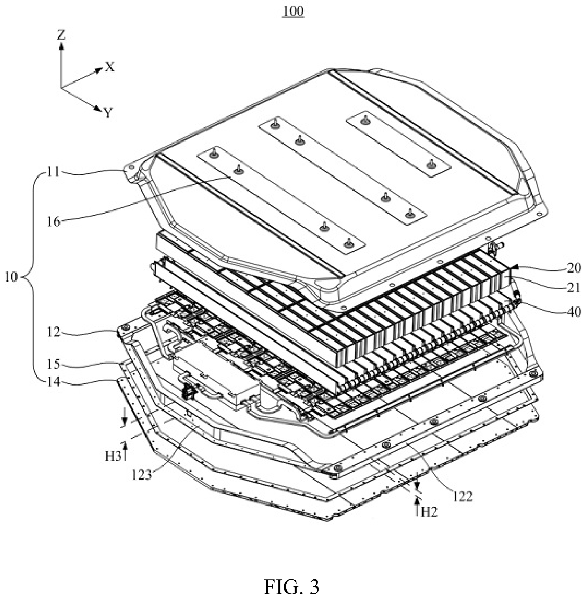

The battery 100 provided in this embodiment of the present application is described below with reference to the accompanying drawings. For convenience of description, the direction parallel to the central axis of the wheels 400 of the vehicle 1000 is defined as the width direction of the battery 100. It should be noted that the central axis of the wheels 400 refers to the central axis of the wheels 400 when the vehicle 1000 is traveling in a straight direction, as shown by the positive and negative directions of the Y-axis in FIGs. 1 to 6 and FIGs. 9 to 12. The direction perpendicular to the central axis of the wheels 400 and parallel to the support plane of the vehicle 1000 is defined as the length direction of the battery 100. It should be noted that the support plane refers to a plane tangent to the side of all wheels 400 of the vehicle 1000 facing away from the vehicle frame 200 when the vehicle 1000 is in a driving or stationary state, as shown by the positive and negative directions of the X-axis in FIGs. 1 to 8 and FIGs. 11 and 12. The direction perpendicular to both the width direction and the length direction is defined as the height direction of the battery 100, as shown by the positive and negative directions of the Z-axis in FIGs. 3 to 12. The direction from the battery 100 toward the support plane and perpendicular to the support plane is defined as the gravity direction of the battery 100, as shown by the negative direction of the Z-axis in FIGs. 3 to 12.

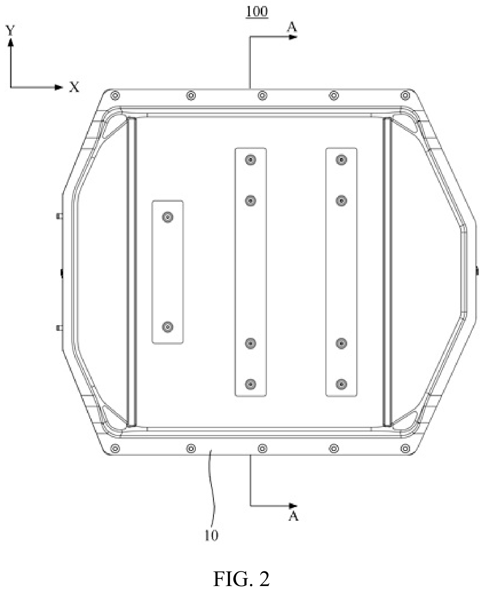

According to a first aspect, referring to FIGs. 2, 3, 9, 11, and 12 together, an embodiment of the present application provides a battery 100 including a battery case 10 and a cell assembly 20, where the battery case 10 includes a case cover 11 and a frame 12, the case cover 11 covers the frame 12 and encloses with the frame 12 to form an accommodating cavity 13, the case cover 11 is configured to be connected to the vehicle frame 200, the cell assembly 20 is accommodated in the accommodating cavity 13, and the cell assembly 20 is connected to the case cover 11.

The battery case 10 is configured to provide an accommodating space for the cell assembly 20, where the internal space of the accommodating cavity 13 constitutes the accommodating space. The case cover 11 and the frame 12 are sequentially connected along the gravity direction of the battery 100 and together form the accommodating cavity 13. The case cover 11 covers the frame 12 and is connected to the frame 12, where the connection method between the case cover 11 and the frame 12 may be, but is not limited to, welding, fastening, or bonding.

The case cover 11, as a part of the battery case 10, is configured to seal one end opening of the accommodating cavity 13. In this embodiment, the case cover 11 is further configured to bear at least a portion of the load of the battery 100, for example, the case cover 11 is configured to bear at least a portion of the load of the cell assembly 20. In some embodiments, the case cover 11 may have a plate-like structure and cover the frame 12. In some other embodiments, the case cover 11 may have a hollow structure and cover the frame 12, where the cavity of the case cover 11 constitutes a part of the accommodating cavity 13. The material of the case cover 11 may be, but is not limited to, aluminum, aluminum alloy, iron, stainless steel, or copper. In some embodiments, the case cover 11 may be an integrally formed component, that is, the case cover 11 is made using an integral forming process, where the integral forming process may be, but not limited to, a die-casting process or a casting process. In some other embodiments, the case cover 11 may be a separately connected component, for example, the case cover 11 includes multiple parts that are separately formed and then connected to each other, where the connection method between the parts may be, but is not limited to, welding, fastening, or bonding, and the material of each part may be the same or different. When the case cover 11 is connected to the vehicle frame 200, the connection method between the case cover 11 and the vehicle frame 200 may be, but is not limited to, fastening, welding, or hook-and-loop connection.

The frame 12 is a support component of the battery case 10. The material of the frame 12 may be, but is not limited to, aluminum, aluminum alloy, iron, stainless steel, or copper. The shape of the frame 12 may be, but is not limited to, circular, rectangular, or square. In some embodiments, the frame 12 may be an integrally formed component, that is, the frame 12 is made using an integral forming process, where the integral forming process may be, but not limited to, a die-casting process or a casting process. In some other embodiments, the frame 12 may be a separately connected component, for example, the frame 12 includes multiple parts that are separately formed and then connected to each other, where the connection method between the parts may be, but is not limited to, welding, fastening, or mortise-and-tenon connection, and the material of each part may be the same or different. When the battery 100 is assembled to the vehicle frame 200, the frame 12 may be connected to the vehicle frame 200 or may not be connected to the vehicle frame 200.

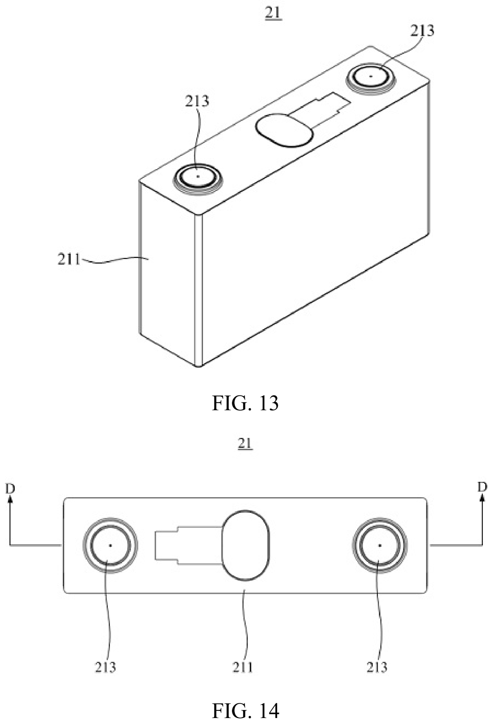

The cell assembly 20 is the main component of the battery 100, configured to store electrical energy. The cell assembly 20 is connected to the case cover 11, and the connection method between the cell assembly 20 and the case cover 11 may be, but is not limited to, bonding, welding, or fastening. The cell assembly 20 includes battery cells 21, where the battery cell 21 is the smallest storage unit for storing electrical energy. Referring to FIGs. 13 and 14 together, the battery cell 21 includes a shell 211, an electrode assembly 212, and an electrode terminal 213.

The shell 211 is a component configured to provide an internal environment for the battery cell 21, where the internal environment can accommodate the electrode assembly 212 and other functional components of the battery cell 21. The shape of the shell 211 may be, but is not limited to, a cuboid, a cylinder, or a hexagonal prism, and it can be understood that the shape of the shell 211 may be determined based on the specific shape of the electrode assembly 212. The material of the shell 211 may be, but is not limited to, copper, iron, aluminum, stainless steel, or aluminum alloy.

The electrode assembly 212 is a component in the battery cell 21 where electrochemical reactions occur. The number of electrode assemblies 212 may be one or may be multiple. The electrode assembly 212 is mainly made by winding or stacking a positive electrode plate, a negative electrode plate, and a separator. During the charging and discharging process of the battery cell 21, active ions (for example, lithium ions) intercalate and deintercalate back and forth between the positive electrode plate and the negative electrode plate. The separator is disposed between the positive electrode plate and the negative electrode plate, serving to prevent short circuits between the positive and negative electrodes while allowing active ions to pass through. The positive electrode plate may include a positive electrode current collector, a positive electrode tab, and a positive electrode active material. The positive electrode tab is connected to the positive electrode current collector, and the positive electrode active material is disposed on at least one surface of the positive electrode current collector. For example, the positive electrode current collector has two surfaces opposite in its thickness direction, and the positive electrode active material is disposed on either or both of the two opposite surfaces of the positive electrode current collector. The negative electrode plate may include a negative electrode current collector, a negative electrode tab, and a negative electrode active material. The negative electrode tab is connected to the negative electrode current collector, and the negative electrode active material is disposed on at least one surface of the negative electrode current collector. For example, the negative electrode current collector has two surfaces opposite in its thickness direction, and the negative electrode active material is disposed on either or both of the two opposite surfaces of the negative electrode current collector. The separator is a separation membrane. The present application does not impose specific restrictions on the type of separation membrane, and any well-known porous structure separation membrane with good chemical and mechanical stability can be used.

The electrode terminal 213 is a component electrically connected to the electrode assembly 212, and configured to output electrical energy from the battery cell 21 or input electrical energy to the battery cell 21. The electrode terminal 213 may be disposed on the shell 211, with a portion of the electrode terminal 213 extending into the internal environment of the battery cell 21 and directly or indirectly connected to the positive electrode tab or the negative electrode tab of the electrode assembly 212, and another portion of the electrode terminal 213 exposed to the external environment of the battery cell 21 and connected to components such as a busbar or a sampling device. The electrode terminal 213 may have a columnar structure, such as a cylindrical structure or a prismatic structure, or the electrode terminal 213 may have a plate-like structure, such as a circular plate or a square plate, or the electrode terminal 213 may have other irregular three-dimensional structures, which are not specifically limited herein. The electrode terminal 213 may be made of a single conductive material or multiple conductive materials, where the conductive material may be, but is not limited to, copper, aluminum, nickel, zinc, or iron, which are not specifically limited herein.

The number of battery cells 21 may be multiple, and multiple battery cells 21 may be connected in series, in parallel, or in a mixed configuration, where a mixed configuration refers to a combination of both series and parallel connections among the multiple battery cells 21. The battery cell 21 may be a secondary battery or a primary battery, where a secondary battery refers to a battery cell 21 that can be recharged to activate the active material for continued use after the battery cell 21 is discharged, and a primary battery refers to a battery cell 21 that cannot be recharged to activate the active material for continued use after the electrical energy of battery cell 21 is depleted. The battery cell 21 may alternatively be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickelcadmium battery, a lead-acid battery, and the like, but is not limited thereto. The battery cell 21 may be a cylindrical battery cell, a prismatic battery cell, a pouch battery cell, or a battery cell 21 of other shapes. The prismatic battery cell includes a square-shell battery cell, a blade-shaped battery cell, a multi-prismatic battery cell, such as a hexagonal prismatic battery cell, and the present application imposes no specific restrictions.

In some embodiments, multiple battery cells 21 may be directly connected in series, in parallel, or in a mixed configuration, and the cell assembly 20 formed by the multiple battery cells 21 is accommodated in the battery case 10. The shell 211 is connected to the case cover 11, and the electrode terminal 213 is disposed on a portion of the shell 211 other than the portion used to connect to the case cover 11. For example, the electrode terminal 213 is disposed on a side of the shell 211 facing away from the case cover 11 along the height direction of the battery 100, in which case the battery cell 21 may be a square-shell battery cell, a cylindrical battery cell, or a prismatic battery cell. For another example, the electrode terminal 213 is disposed on one side or two opposite sides of the shell 211 along the width direction of the battery 100, in which case the battery cell 21 may be a blade-shaped battery cell. For still another example, the electrode terminal 213 is disposed on one side or two opposite sides of the shell 211 along the length direction of the battery 100, in which case the battery cell 21 may be a blade-shaped battery cell.

In some other embodiments, the battery 100 may include multiple battery cells 21 first connected in series, in parallel, or in a mixed configuration to form battery modules, and multiple battery modules are then connected in series, in parallel, or in a mixed configuration to form a cell assembly 20, which is accommodated in the battery case 10. The battery module includes a housing and an electrical lead-out, where multiple battery cells 21 are accommodated in the housing, and the electrical lead-out is directly or indirectly connected to the electrode terminal 213 of the battery cell 21 to output electrical energy from the battery cell 21 or input electrical energy to the battery cell 21. The housing is directly connected to the case cover 11, and the electrical lead-out is disposed on a portion of the housing other than the portion used to connect to the case cover 11. For example, the electrical lead-out is disposed on a side of the housing facing away from the case cover 11 along the height direction of the battery 100, for another example, the electrical lead-out is disposed on one side or two opposite sides of the housing along the width direction of the battery 100, for still another example, the electrical lead-out is disposed on one side or two opposite sides of the housing along the length direction of the battery 100.

In some embodiments, when the battery 100 is assembled to the vehicle frame 200, the case cover 11 and the frame 12 are sequentially connected along the gravity direction of the battery 100, the side of the case cover 11 facing away from the frame 12 is configured to be connected to the vehicle frame 200, and the cell assembly 20 is connected to the side of the case cover 11 facing the frame 12.

In the battery 100 provided in this embodiment of the present application, the case cover 11 of the battery case 10 can be connected to the vehicle frame 200, and the cell assembly 20 of the battery 100 is connected to the case cover 11. In this way, at least a portion of the load of the cell assembly 20 can be directly transferred to the vehicle frame 200 through the case cover 11, in other words, the vehicle frame 200 can bear at least a portion of the load of the cell assembly 20, reducing the load borne by the frame 12 of the battery case 10. This can reduce the strength requirements for the frame 12, allowing for a reduction in the dimension of the frame 12, such as reducing the height dimension of the frame 12, thereby effectively reducing the weight of the battery 100, increasing the mass energy density of the battery 100, and thus effectively improving the range performance of the electric device.

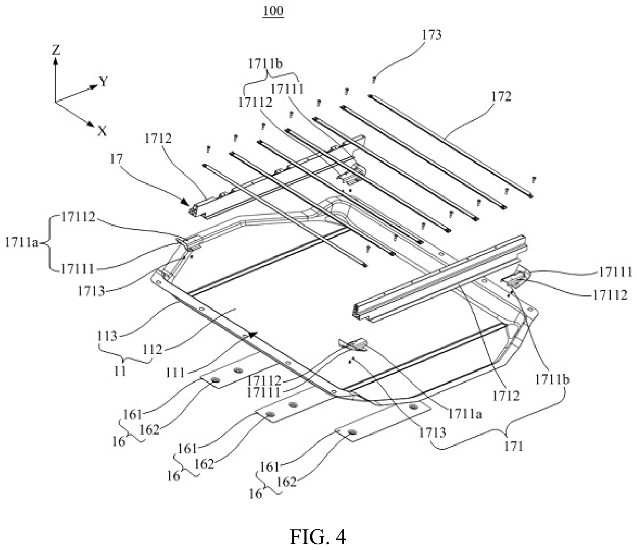

In some embodiments of the present application, referring to FIGs. 4, 5, and 9 together, the case cover 11 has a first cavity 111, the frame 12 has a second cavity 121, the first cavity 111 and the second cavity 121 are interconnected to form the accommodating cavity 13, and at least a portion of the cell assembly 20 is accommodated in the first cavity 111.

In other words, in this embodiment, the case cover 11 has a hollow structure, and in the height direction of the battery 100, at least a portion of the cell assembly 20 can be accommodated in the first cavity 111. In some embodiments, a portion of the cell assembly 20 may be accommodated in the first cavity 111, and another portion of the cell assembly 20 may be accommodated in the second cavity 121. Of course, in other embodiments, in the height direction of the battery 100, the cell assembly 20 may alternatively be entirely accommodated in the first cavity 111, and the second cavity 121 may be configured to accommodate other functional components of the battery 100, such as a battery management module, a sampling line, and a cooling mechanism.

In some embodiments, the case cover 11 includes an upper wall 112 and side walls 113, where the upper wall 112 is the part of the case cover 11 for sealing one end opening of the accommodating cavity 13, the number of side walls 113 may be multiple, and the multiple side walls 113 are connected to the periphery of the upper wall 112 and enclose with the upper wall 112 to form the first cavity 111.

By adopting the above technical solution, at least a portion of the cell assembly 20 can be accommodated in the first cavity 111, effectively reducing the depth requirement for the second cavity 121. This can reduce the depth of the second cavity 121 by reducing the height dimension of the frame 12, thereby further reducing the weight of the battery 100, further increasing the mass energy density of the battery 100, and thus further improving the range performance of the electric device.

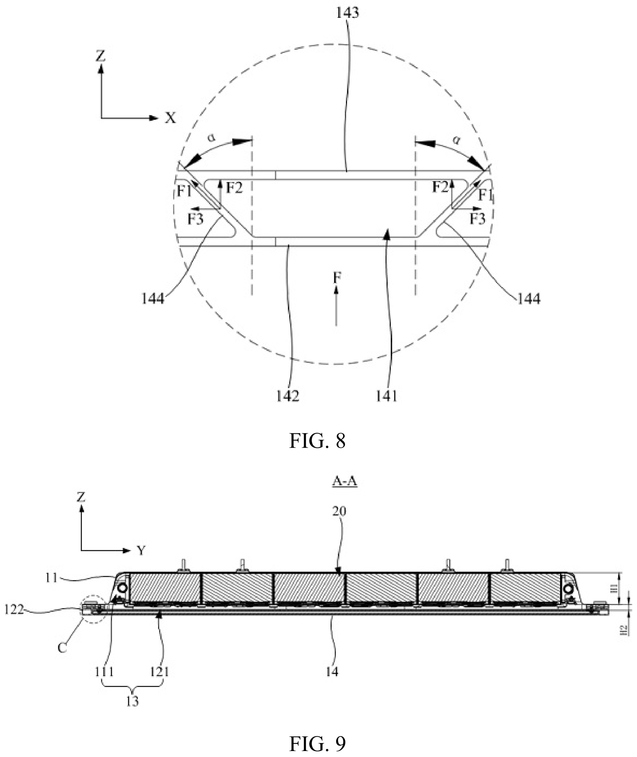

In some embodiments of the present application, referring to FIGs. 3 and 9 together, a minimum depth H2 of the second cavity 121 is less than a maximum depth H1 of the first cavity 111.

In some other embodiments of the present application, referring to FIGs. 3 and 9 together, a maximum depth H3 of the second cavity 121 is less than a maximum depth H1 of the first cavity 111.

The maximum depth H1 of the first cavity 111 refers to the maximum dimension of the first cavity 111 along the height direction of the battery 100. Similarly, the minimum depth H2 of the second cavity 121 refers to the minimum dimension of the second cavity 121 along the height direction of the battery 100, and the maximum depth H3 of the second cavity 121 refers to the maximum dimension of the second cavity 121 along the height direction of the battery 100.

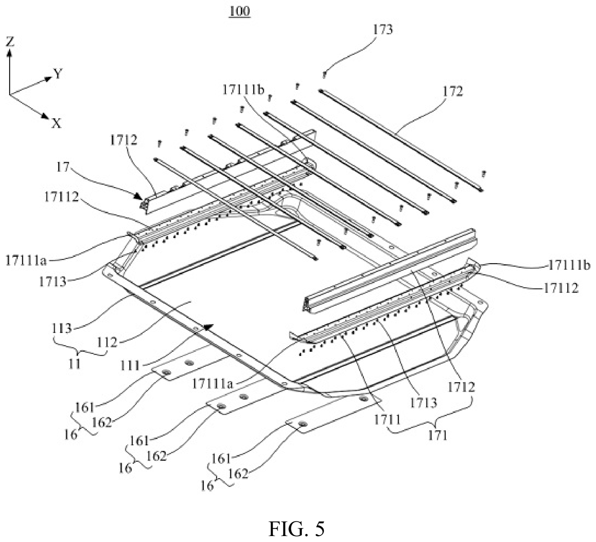

The multiple side walls 113 may have the same or different heights. In some embodiments, as shown in FIGs. 4 and 5, the maximum heights of two side walls 113 oppositely disposed along the width direction of the battery 100 are greater than the maximum heights of two side walls 113 oppositely disposed along the length direction of the battery 100, where the side wall 113 with the greater maximum height corresponds to the position of the maximum depth H1 of the first cavity 111.

Different parts of the frame 12 may have the same or different heights. In some embodiments, as shown in FIG. 3, the frame 12 includes a first support beam 122 and a second support beam 123, where the maximum height of the first support beam 122 is less than the maximum height of the second support beam 123. In this case, the first support beam 122 with the smaller maximum height corresponds to the position of the minimum depth H2 of the second cavity 121, and the second support beam 123 with the larger maximum height corresponds to the position of the maximum depth H3 of the second cavity 121.

By adopting the above technical solution, compared to the conventional solution where the maximum depth of the second cavity is greater than the maximum depth of the first cavity, the embodiments of the present application can accommodate a greater volume of the cell assembly 20 in the first cavity 111, further reducing the depth requirement for the second cavity 121, allowing for a further reduction in the height dimension of the frame 12, thereby further reducing the weight of the frame 12 and the total weight of the battery 100, further increasing the mass energy density of the battery 100, and thus further improving the range performance of the electric device.

In some embodiments of the present application, referring to FIGs. 3, 9, and 10 together, the frame 12 includes a first support beam 122, the first support beam 122 includes a support beam body 1221 and an energy-absorbing beam body 1222, and the energy-absorbing beam body 1222 is connected to a side of the support beam body 1221 facing away from the accommodating cavity 13.

The first support beam 122 is a part of the support components of the frame 12. In some embodiments, the dimension of the first support beam 122 along the width direction of the battery 100 is smaller than the dimension of the first support beam 122 along the length direction of the battery 100, meaning that the first support beam 122 extends along the length direction of the battery 100, for example, the first support beam 122 extends linearly along the length direction of the battery 100, for another example, the first support beam 122 extends with a bend along the length direction of the battery 100. The number of first support beams 122 may be two, with the two first support beams 122 spaced apart along the width direction of the battery 100. In some other embodiments, the dimension of the first support beam 122 along the length direction of the battery 100 is smaller than the dimension of the first support beam 122 along the width direction of the battery 100, meaning that the first support beam 122 extends along the width direction of the battery 100, for example, the first support beam 122 extends linearly along the width direction of the battery 100, for another example, the first support beam 122 extends with a bend along the width direction of the battery 100. The number of first support beams 122 may be two, with the two first support beams 122 spaced apart along the length direction of the battery 100.

The support beam body 1221 is a main support component of the first support beam 122, and the energy-absorbing beam body 1222 is configured to absorb the impact energy of an external force acting on the first support beam 122. In some embodiments, the energy-absorbing beam body 1222 may have a strip-like structure and extend along the length direction of the support beam body 1221. In some other embodiments, the energy-absorbing beam body 1222 may include multiple energy-absorbing portions (not shown in the figures), with the multiple energy-absorbing portions spaced apart along the length direction of the support beam body 1221. In some embodiments, the support beam body 1221 and the energy-absorbing beam body 1222 may be an integrally formed component, for example, the support beam body 1221 and the energy-absorbing beam body 1222 are integrally formed by a die-casting process. In some other embodiments, the support beam body 1221 and the energy-absorbing beam body 1222 may be separate components, for example, the support beam body 1221 and the energy-absorbing beam body 1222 are separately formed and then connected to each other, where the connection method between the support beam body 1221 and the energy-absorbing beam body 1222 may be, but is not limited to, welding or fastening. Under the condition that the support beam body 1221 and the energy-absorbing beam body 1222 are separate components, the material of the support beam body 1221 and the material of the energy-absorbing beam body 1222 may be the same, for example, the material of the support beam body 1221 and the material of the energy-absorbing beam body 1222 are aluminum alloy, or the material of the support beam body 1221 and the material of the energy-absorbing beam body 1222 may be different, for example, the material of the support beam body 1221 is aluminum alloy, and the material of the energy-absorbing beam body 1222 is stainless steel.

In some embodiments, the frame 12 may further include a second support beam 123 connected between two first support beams 122, where the second support beam 123 is another part of the support components of the frame 12, and the material of the second support beam 123 may be, but is not limited to, aluminum, aluminum alloy, iron, stainless steel, or copper. Under the condition that the first support beam 122 extends along the length direction of the battery 100, the dimension of the second support beam 123 along the length direction of the battery 100 is smaller than the dimension of the second support beam 123 along the width direction of the battery 100, meaning that the second support beam 123 extends along the width direction of the battery 100, for example, the second support beam 123 extends linearly along the width direction of the battery 100, for another example, the second support beam 123 extends with a bend along the width direction of the battery 100. The number of second support beams 123 may be two, with the two second support beams 123 spaced apart along the length direction of the battery 100. Under the condition that the first support beam 122 extends along the width direction of the battery 100, the dimension of the second support beam 123 along the width direction of the battery 100 is smaller than the dimension of the second support beam 123 along the length direction of the battery 100, meaning that the second support beam 123 extends along the length direction of the battery 100, for example, the second support beam 123 extends linearly along the length direction of the battery 100, for another example, the second support beam 123 extends with a bend along the length direction of the battery 100. The number of second support beams 123 may be two, with the two second support beams 123 spaced apart along the width direction of the battery 100. The two first support beams 122 and the two second support beams 123 enclose the second cavity 121. The second support beam 123 may be provided with an electrical interface for connecting a high-voltage box, a pipeline interface for connecting thermal management components, and the like.

By adopting the above technical solution, under the condition of an external force impact on the outer side of the battery 100, the energy-absorbing beam body 1222 can effectively absorb the impact energy, thereby effectively mitigating the transfer of impact energy to the cell assembly 20 through the frame 12, and effectively reducing the risk of damage to the cell assembly 20.

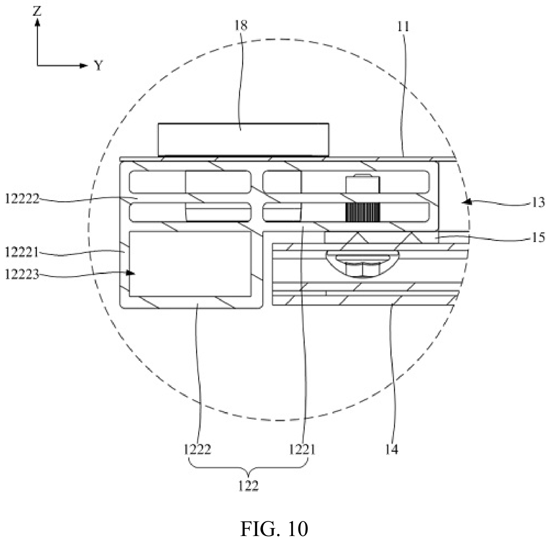

In some embodiments of the present application, referring to FIG. 10, the energy-absorbing beam body 1222 includes a main beam body 12221, where the main beam body 12221 is connected to a side of the support beam body 1221 facing away from the accommodating cavity 13 and has a first energy-absorbing cavity 12223.

The main beam body 12221 is a main part of the energy-absorbing beam body 1222, the main beam body 12221 has a hollow structure, and the cavity of the main beam body 12221 constitutes the first energy-absorbing cavity 12223. The first energy-absorbing cavity 12223 is configured to provide a collapse space for the main beam body 12221. Under the condition of an external force impact on the energy-absorbing beam body 1222, the main beam body 12221 can collapse inward and deform, thereby effectively absorbing the impact energy. The cross-sectional shape of the main beam body 12221 may be, but is not limited to, square, circular, or triangular.

By adopting the above technical solution, under the condition of an external force impact on the outer side of the battery 100, the main beam body 12221 can collapse inward and deform, thereby effectively absorbing the impact energy.

In some embodiments of the present application, referring to FIG. 10, the energy-absorbing beam body 1222 further includes a first energy-absorbing body 12222, where the first energy-absorbing body 12222 is disposed in the first energy-absorbing cavity 12223.

The first energy-absorbing body 12222 is configured to support the main beam body 12221, providing secondary energy absorption. This means that, under the condition of an external force impact on the energy-absorbing beam body 1222, when the main beam body 12221 absorbs the impact energy and undergoes collapse deformation, the main beam body 12221 compresses the first energy-absorbing body 12222, causing the first energy-absorbing body 12222 to undergo collapse deformation, thereby achieving secondary energy absorption. The first energy-absorbing body 12222 may be, but is not limited to, an energy-absorbing rib, or an energy-absorbing adhesive.

By adopting the above technical solution, under the condition of an external force impact on the outer side of the battery 100, the impact energy can be transferred to the first energy-absorbing body 12222 through the main beam body 12221, causing the main beam body 12221 and the first energy-absorbing body 12222 to deform sequentially, thereby enabling the energy-absorbing beam body 1222 to more effectively absorb the impact energy, and further reducing the risk of damage to the cell assembly 20.

In some embodiments of the present application, referring to FIG. 10, the first energy-absorbing body 12222 is an energy-absorbing rib and extends along a length direction of the main beam body 12221, and the first energy-absorbing body 12222 is connected between two opposite walls of the main beam body 12221.

In some embodiments, under the condition that the first support beam 122 extends along the length direction of the battery 100, the support beam body 1221 and the energy-absorbing beam body 1222 also extend along the length direction of the battery 100, meaning that the main beam body 12221 and the first energy-absorbing body 12222 also extend along the length direction of the battery 100. The first energy-absorbing body 12222 may be connected between two opposite walls of the main beam body 12221 along the width direction of the battery 100, or the first energy-absorbing body 12222 may be connected between two opposite walls of the main beam body 12221 along the height direction of the battery 100.

In some other embodiments, under the condition that the first support beam 122 extends along the width direction of the battery 100, the support beam body 1221 and the energy-absorbing beam body 1222 also extend along the width direction of the battery 100, meaning that the main beam body 12221 and the first energy-absorbing body 12222 also extend along the width direction of the battery 100. The first energy-absorbing body 12222 may be connected between two opposite walls of the main beam body 12221 along the length direction of the battery 100, or the first energy-absorbing body 12222 may be connected between two opposite walls of the main beam body 12221 along the height direction of the battery 100.

It should be noted that the number of first energy-absorbing bodies 12222 may be one or may be multiple, depending on actual application needs.

By adopting the above technical solution, the impact energy can be more effectively absorbed, thereby further reducing the risk of damage to the cell assembly 20.

In some embodiments of the present application, referring to FIG. 3, the first support beam 122 extends along the length direction of the battery 100 and is located on one side of the battery 100 along the width direction the battery 100.

It can be understood that the first support beam 122 may extend linearly along the length direction of the battery 100 or may extend with a bend along the length direction of the battery 100.

By adopting the above technical solution, under the condition of an external force impact on one side of the battery 100 along the width direction the battery 100, the energy-absorbing beam body 1222 can effectively absorb the impact energy, thereby reducing the risk of damage to the cell assembly 20.

In some embodiments of the present application, referring to FIGs. 3 and 6 to 9 together, the battery case 10 further includes a guard plate 14 covering a side of the frame 12 facing away from the case cover 11, where the guard plate 14 has a second energy-absorbing cavity 141.

The guard plate 14 is a protective component of the battery case 10, and the guard plate 14 covers a side of the frame 12 facing away from the case cover 11 to seal an end opening of the accommodating cavity 13 away from the case cover 11, thereby protecting the cell assembly 20. The material of the guard plate 14 may be, but is not limited to, aluminum, aluminum alloy, iron, stainless steel, or copper. It can be understood that the guard plate 14 is connected to the frame 12, and the connection method between the guard plate 14 and the frame 12 may be, but is not limited to, welding, fastening, or bonding. The guard plate 14 has a hollow structure, and the cavity of the guard plate 14 constitutes the second energy-absorbing cavity 141, and the second energy-absorbing cavity 141 is configured to provide a collapse space for the guard plate 14. Under the condition of an external force impact on the guard plate 14, the guard plate 14 can collapse inward and deform, thereby effectively absorbing the impact energy. In some embodiments, the guard plate 14 may be an integrally formed component, meaning that the guard plate 14 is made using an integral forming process, where the integral forming process is, for example, but not limited to, a die-casting process or a casting process. In some other embodiments, the guard plate 14 may alternatively be a separately connected component, for example, the guard plate 14 includes multiple parts, where the multiple parts are separately formed and then connected to each other, the connection method between the parts may be, but is not limited to, welding or bonding, and the materials of these parts may be the same or different.

By adopting the above technical solution, under the condition of an external force impact on the bottom of the battery 100, the guard plate 14 can collapse inward and deform to absorb the impact energy, thereby effectively mitigating the transfer of impact energy to the cell assembly 20, and effectively reducing the risk of damage to the cell assembly 20.

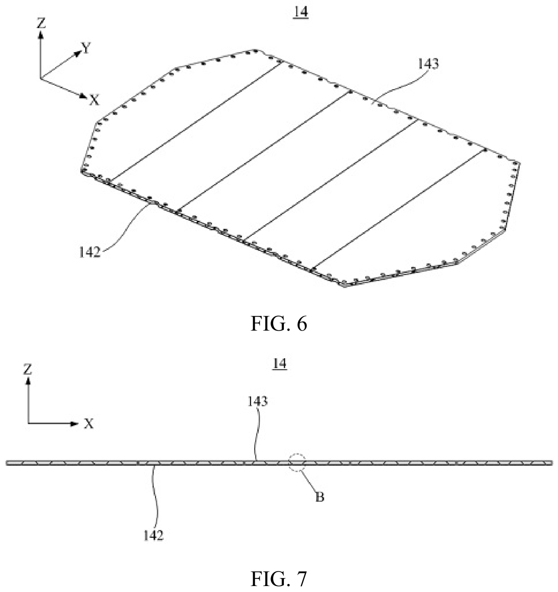

In some embodiments of the present application, referring to FIGs. 6 to 8 together, the guard plate 14 includes a first plate 142, a second plate 143, and a second energy-absorbing body 144, where the first plate 142 and the second plate 143 are spaced apart along the height direction of the battery 100 to form the second energy-absorbing cavity 141, and the second energy-absorbing body 144 is disposed in the second energy-absorbing cavity 141.

The first plate 142 and the second plate 143 together constitute the main body of the guard plate 14, and the first plate 142 and the second plate 143 are spaced apart along the height direction of the battery 100 to form the second energy-absorbing cavity 141. It can be understood that the first plate 142 and the second plate 143 are parallel to each other, with the surface of the first plate 142 opposite and spaced apart from the surface of the second plate 143. The first plate 142 may be disposed on the side of the second plate 143 facing away from the case cover 11, or the second plate 143 may be disposed on the side of the first plate 142 facing away from the case cover 11. The first plate 142 and the second plate 143 are connected together through necessary connection structures.

The second energy-absorbing body 144 provides secondary energy absorption. This means that, under the condition of an external force impact on the main body composed of the first plate 142 and the second plate 143, the main body compresses the second energy-absorbing body 144, causing the second energy-absorbing body 144 to undergo collapse deformation, thereby achieving secondary energy absorption. The second energy-absorbing body 144 may be, but is not limited to, an energy-absorbing rib or an energy-absorbing adhesive. The material of the first plate 142, the material of the second plate 143, and the material of the second energy-absorbing body 144 may be the same, for example, the material of the first plate 142, the material of the second plate 143, and the material of the second energy-absorbing body 144 are aluminum alloy. Alternatively, the material of the first plate 142, the material of the second plate 143, and the material of the second energy-absorbing body 144 may be different, for example, the material of the first plate 142 and the material of the second plate 143 are aluminum alloy, and the material of the second energy-absorbing body 144 is stainless steel.

By adopting the above technical solution, under the condition of an external force impact on the bottom of the battery 100, the impact energy can be transferred to the second energy-absorbing body 144, causing the second energy-absorbing body 144 to deform, thereby enabling the guard plate 14 to more effectively absorb the impact energy, and further reducing the risk of damage to the cell assembly 20.

In some embodiments of the present application, referring to FIGs. 7 and 8 together, the second energy-absorbing body 144 is an energy-absorbing rib, and the second energy-absorbing body 144 is connected between the first plate 142 and the second plate 143.

The second energy-absorbing body 144 may extend in any direction between the first plate 142 and the second plate 143, for example, the second energy-absorbing body 144 extends along the width direction of the battery 100, for another example, the second energy-absorbing body 144 extends along the length direction of the battery 100. The number of second energy-absorbing bodies 144 may be one or may be multiple, depending on actual application needs.

By adopting the above technical solution, the impact energy can be more effectively absorbed, thereby further reducing the risk of damage to the cell assembly 20.

In some embodiments of the present application, referring to FIG. 8, a thickness direction of the second energy-absorbing body 144 is inclined relative to a height direction of the battery 100.

In this embodiment, the second energy-absorbing body 144 has a strip-like plate structure, where the thickness direction of the second energy-absorbing body 144 refers to the direction perpendicular to the plate surface of the second energy-absorbing body 144. The thickness direction of the second energy-absorbing body 144 is inclined relative to the height direction of the battery 100, in other words, the thickness direction of the second energy-absorbing body 144 is neither perpendicular nor parallel to the height direction of the battery 100. The included angle formed between the thickness direction of the second energy-absorbing body 144 and the height direction of the battery 100 may be determined based on actual application needs, for example, the included angle α formed between the thickness direction of the second energy-absorbing body 144 and the height direction of the battery 100 may be 45°, 60°, 75°, and the like.

By adopting the above technical solution, the second energy-absorbing body 144 can quickly collapse and deform under an external force impact, thereby more effectively absorbing the impact energy, and further reducing the risk of damage to the cell assembly 20.

In some embodiments of the present application, referring to FIG. 8, the number of second energy-absorbing bodies 144 is multiple, the multiple second energy-absorbing bodies 144 are spaced apart from each other along a direction perpendicular to a length direction of the second energy-absorbing body 144, and thickness directions of two adjacent second energy-absorbing bodies 144 are inclined in different directions relative to the height direction of the battery 100.

The multiple second energy-absorbing bodies 144 being arranged in parallel along a direction perpendicular to the length direction of the second energy-absorbing body 144 means that the length directions of the multiple second energy-absorbing bodies 144 are parallel to each other and are sequentially arranged side by side along a direction perpendicular to the length direction of the second energy-absorbing body 144. Two adjacent second energy-absorbing bodies 144 may be spaced apart or may abut against each other. The thickness directions of two adjacent second energy-absorbing bodies 144 being inclined in different directions relative to the height direction of the battery 100 means that the thickness directions of the two adjacent second energy-absorbing bodies 144 are not parallel to each other.

In some embodiments, the thickness directions of two adjacent second energy-absorbing bodies 144 are inclined in opposite directions relative to the height direction of the battery 100, meaning that in two adjacent second energy-absorbing bodies 144, the included angle formed between the thickness direction of one second energy-absorbing body 144 and the height direction of the battery 100 is equal to the included angle formed between the thickness direction of the other second energy-absorbing body 144 and the height direction of the battery 100, and the thickness directions of the two second energy-absorbing bodies 144 are not parallel to each other. In other words, any plane parallel to the length direction of the second energy-absorbing body 144 and the height direction of the battery 100 is defined as a bisecting plane, and the included angle formed by the thickness directions of two adjacent second energy-absorbing bodies 144 is bisected by the bisecting plane.

The following further explains this embodiment by taking the first plate 142 being disposed on the side of the second plate 143 facing away from the case cover 11 as an example.

Referring to FIG. 8, under the condition that the first plate 142 is subjected to an external force impact, the impact force F is transferred through the first plate 142 to the second energy-absorbing body 144 to generate a thrust F1 acting on the second energy-absorbing body 144, where the direction of the thrust F1 is from the first plate 142 along the second energy-absorbing body 144 toward the second plate 143. Decomposing the thrust F1 yields a first component force F2 parallel to the height direction of the battery 100 and a second component force F3 parallel to the length direction of the battery 100. Since the thickness directions of two adjacent second energy-absorbing bodies 144 are inclined in opposite directions relative to the height direction of the battery 100, the directions of the second component forces F3 received by the two adjacent second energy-absorbing bodies 144 are opposite, thereby causing the second component forces F3 received by the two adjacent second energy-absorbing bodies 144 to offset each other, meaning that at least a portion of the impact force received by the two adjacent second energy-absorbing bodies 144 offsets each other out.

By adopting the above technical solution, when the guard plate 14 is subjected to an external force impact, at least a portion of the impact energy received by two adjacent second energy-absorbing bodies 144 can offset each other, thereby effectively improving the impact resistance of the guard plate 14, further reducing the risk of damage to the cell assembly 20.

In some embodiments of the present application, the second energy-absorbing body 144 extends along the width direction of the battery 100.

In other words, the length direction of the second energy-absorbing body 144 is parallel to the width direction of the battery 100. Under the condition of an external force impact on one side of the battery 100 along the width direction, the impact energy can be transferred from one end of the second energy-absorbing body 144 to the other end of the second energy-absorbing body 144, effectively reducing the risk of bending of the second energy-absorbing body 144.

By adopting the above technical solution, the impact resistance of the guard plate 14 in the width direction of the battery 100 is effectively improved, so that under the condition of an external force impact on one side of the battery 100 along the width direction, the guard plate 14 can effectively withstand the impact energy, thereby effectively reducing the risk of damage to the cell assembly 20.

In some embodiments of the present application, referring to FIG. 8, the second energy-absorbing body 144 is an energy-absorbing rib, the thickness direction of the second energy-absorbing body 144 is inclined relative to the height direction of the battery 100, and the second energy-absorbing body 144 extends along the width direction of the battery 100.

By adopting the above technical solution, the force-bearing area of the second energy-absorbing body 144 along the width direction of the battery 100 is effectively increased, effectively improving the impact resistance of the guard plate 14 in the width direction of the battery 100. In this way, under the condition of an external force impact on one side of the battery 100 along the width direction, the guard plate 14 can effectively withstand the impact energy, thereby effectively reducing the risk of damage to the cell assembly 20.

In some embodiments of the present application, referring to FIG. 10, in a direction perpendicular to the length direction of the first support beam 122, at least a portion of the energy-absorbing beam body 1222 protrudes beyond the guard plate 14.

It can be understood that when the first support beam 122 extends along the length direction of the battery 100, in the width direction of the battery 100, at least a portion of the energy-absorbing beam body 1222 protrudes beyond the guard plate 14.

In some embodiments, in the height direction of the battery 100, the energy-absorbing beam body 1222 protrudes away from the case cover 11 beyond the side of the support beam body 1221 facing away from the case cover 11, so that the first support beam 122 generally has a stepped structure. The guard plate 14 may be connected to the stepped space defined by the portion of the energy-absorbing beam body 1222 protruding beyond the support beam body 1221 and the support beam body 1221. The guard plate 14 may be connected to the support beam body 1221, for example, the guard plate 14 may be connected to the side of the support beam body 1221 facing away from the case cover 11, or the guard plate 14 may be connected to the energy-absorbing beam body 1222, for example, the guard plate 14 may be connected to the side of the energy-absorbing beam body 1222 facing the accommodating cavity 13.

In some other embodiments, in the height direction of the battery 100, the side of the energy-absorbing beam body 1222 facing away from the case cover 11 may be flush with the side of the support beam body 1221 facing away from the case cover 11, or the side of the support beam body 1221 facing away from the case cover 11 may protrude beyond the side of the energy-absorbing beam body 1222 facing away from the case cover 11. The guard plate 14 is connected to the support beam body 1221, and the guard plate 14 and the energy-absorbing beam body 1222 do not overlap with each other in the height direction of the battery 100.

Of course, in other embodiments, in the height direction of the battery 100, the guard plate 14 may alternatively partially overlap with the energy-absorbing beam body 1222, but in a direction perpendicular to the length direction of the first support beam 122, at least a portion of the energy-absorbing beam body 1222 protrudes beyond the guard plate 14.

By adopting the above technical solution, under the condition of an external force impact on the battery 100, the energy-absorbing beam body 1222 can first absorb the impact energy, thereby effectively reducing the risk of the impact energy being transferred to the guard plate 14.

In some embodiments of the present application, the cell assembly 20 is connected to the guard plate 14.

In some embodiments, under the condition that the cell assembly 20 is formed by directly connecting multiple battery cells 21 in series, in parallel, or in a mixed configuration, the shell 211 is directly connected to the case cover 11 and the guard plate 14, and the electrode terminal 213 is disposed on a portion of the shell 211 other than the portions used to connect to the case cover 11 and the guard plate 14. For example, the electrode terminal 213 is disposed on one side or two opposite sides of the shell 211 along the width direction of the battery 100, in which case the battery cell 21 may be a blade-shaped battery cell. For another example, the electrode terminal 213 is disposed on one side or two opposite sides of the shell 211 along the length direction of the battery 100, in which case the battery cell 21 may be a blade-shaped battery cell.

In some other embodiments, under the condition that multiple battery cells 21 are first connected in series, in parallel, or in a mixed configuration to form battery modules, and multiple battery modules are then connected in series, in parallel, or in a mixed configuration to form the cell assembly 20, the housing is directly connected to the case cover 11 and the guard plate 14, and the electrical lead-out is disposed on a portion of the housing other than the portions used to connect to the case cover 11 and the guard plate 14. For example, the electrical lead-out is disposed on one side or two opposite sides of the housing along the width direction of the battery 100, for another example, on one side or two opposite sides of the housing along the length direction of the battery 100.

It should be noted that the connection method between the cell assembly 20 and the guard plate 14 may be, but is not limited to, bonding or fastening. In some embodiments, the cell assembly 20 is bonded to the guard plate 14, this not only can make the force between the cell assembly 20 and the guard plate 14 more uniform but also can simplify the assembly process of the cell assembly 20 and the guard plate 14, effectively improving the assembly efficiency of the battery 100.

By adopting the above technical solution, the cell assembly 20 can be connected between the case cover 11 and the guard plate 14, thereby mitigating the shaking of the cell assembly 20, and effectively improving the reliability of the battery 100.

In some embodiments of the present application, referring to FIGs. 3 and 10 together, the battery case 10 further includes a sealing member 15, where the sealing member 15 is disposed between the frame 12 and the guard plate 14.

The sealing member 15 is a component configured to seal the gap between the frame 12 and the guard plate 14. The sealing member 15 is made of a sealing material, where the sealing material may be, but is not limited to, rubber, silicone, or adhesive. The sealing member 15 may have a ring-like structure, and the sealing member 15 is disposed around the accommodating cavity 13 to reduce the risk of communication between the accommodating cavity 13 and the external environment of the battery 100 through the gap between the frame 12 and the guard plate 14.

By adopting the above technical solution, the sealing performance of the battery 100 is effectively improved, thereby effectively enhancing the safety of the battery 100.

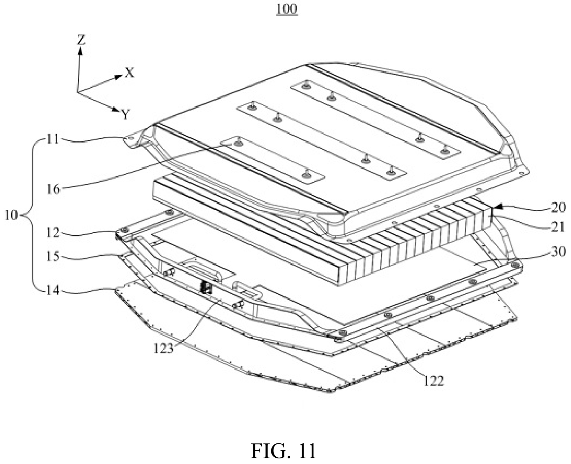

In some embodiments of the present application, referring to FIG. 11, the battery 100 further includes a first thermal management component 30, where the first thermal management component 30 is disposed between the cell assembly 20 and the guard plate 14 and is attached to the cell assembly 20.

The first thermal management component 30 is a component configured to perform heat exchange with the cell assembly 20, where the heat exchange may involve cooling or heating the cell assembly 20. The first thermal management component 30 may be, but is not limited to, a liquid cooling component, an air cooling component, or a metal heat-conducting component.

In some embodiments, the first thermal management component 30 is a liquid cooling plate, where one surface of the first thermal management component 30 is attached to the cell assembly 20, and another surface of the first thermal management component 30 may be attached to the guard plate 14 or may be spaced apart from the guard plate 14. In some embodiments, the first thermal management component 30 may alternatively be integrally formed on the guard plate 14. The battery 100 may further include a first inlet pipe and a first outlet pipe, where the first inlet pipe is connected to an inlet of the first thermal management component 30, and the first outlet pipe is connected to an outlet of the first thermal management component 30. Cooling fluid flows through the first inlet pipe into a cooling channel of the first thermal management component 30 via the inlet of the first thermal management component 30, and then is discharged through the outlet of the first thermal management component 30 along the first outlet pipe, thereby achieving circulation of the cooling fluid within the first thermal management component 30, and effectively exchanging heat with the cell assembly 20.

In some embodiments, under the condition that the cell assembly 20 is formed by directly connecting multiple battery cells 21 in series, in parallel, or in a mixed configuration, the shell 211 is directly connected to the case cover 11, and the electrode terminal 213 is disposed on a portion of the shell 211 other than the portions used to connect to the case cover 11 and facing the first thermal management component 30. For example, the electrode terminal 213 is disposed on one side or two opposite sides of the shell 211 along the width direction of the battery 100, in which case the battery cell 21 may be a blade-shaped battery cell; for another example, the electrode terminal 213 is disposed on one side or two opposite sides of the shell 211 along the length direction of the battery 100, in which case the battery cell 21 may be a blade-shaped battery cell.

In some other embodiments, under the condition that multiple battery cells 21 are first connected in series, in parallel, or in a mixed configuration to form battery modules, and multiple battery modules are then connected in series, in parallel, or in a mixed configuration to form the cell assembly 20, the housing is directly connected to the case cover 11, and the electrical lead-out is disposed on a portion of the housing other than the portions used to connect to the case cover 11 and facing the first thermal management component 30. For example, the electrical lead-out is disposed on one side or two opposite sides of the housing along the width direction of the battery 100, for another example, the electrical lead-out is disposed on one side or two opposite sides of the housing along the length direction of the battery 100.

By adopting the above technical solution, the heat exchange performance of the battery 100 is effectively improved, thereby effectively enhancing the safety of the battery 100.

In some embodiments of the present application, the frame 12 is configured to be connected to the vehicle frame 200.

When the battery 100 is assembled to the vehicle frame 200, both the case cover 11 and the frame 12 are connected to the vehicle frame 200. In this case, a portion of the load of the case cover 11 and a portion of the load of the cell assembly 20 can be transferred to the vehicle frame 200 through the frame 12, reducing the connection stress between the frame 12 and the case cover 11.

The connection method between the frame 12 and the vehicle frame 200 may be, but is not limited to, fastening, welding, or hook-and-loop connection. In some embodiments, the frame 12 is provided with a connection through-hole, and the battery case 10 further includes a fastener, where the fastener passes through the connection through-hole to connect to the vehicle frame 200, and the fastener may be, but is not limited to, a bolt, a screw, or a rivet. The battery case 10 may further include a connection sleeve 18, where the connection sleeve 18 is disposed in the connection through-hole and coaxially aligned with the connection through-hole, and the fastener passes through the connection sleeve 18 and is connected to the vehicle frame 200.

By adopting the above technical solution, the connection stress between the frame 12 and the case cover 11 is effectively reduced, thereby effectively reducing the risk of fracture at the connection portion between the frame 12 and the case cover 11.

In some embodiments of the present application, referring to FIGs. 3, 4, and 5 together, the battery case 10 further includes a mounting assembly 16, the cell assembly 20 is connected to the case cover 11, the case cover 11 is connected to the mounting assembly 16, and the mounting assembly 16 is configured to be connected to the vehicle frame 200.

The mounting assembly 16 is a component configured to connect the case cover 11 to the vehicle frame 200. The mounting assembly 16 may be, but is not limited to, a fastening connection assembly, a hook-and-loop connection assembly, or a clamping connection assembly. The mounting assembly 16 may be disposed on a surface of the case cover 11 facing away from the cell assembly 20, or the mounting assembly 16 may be disposed on a peripheral side of the case cover 11.

The adoption of the above technical solution facilitates the connection of the case cover 11 to the vehicle frame 200.

In some embodiments of the present application, referring to FIGs. 4 and 5 together, at least a portion of the mounting assembly 16 includes a support member 161 and a first connecting member 162, where the support member 161 is connected to the case cover 11, and the first connecting member 162 is connected to the support member 161 and configured to be connected to the vehicle frame 200.

It can be understood that the number of mounting assemblies 16 may be multiple, where some of the mounting assemblies 16 may be connected to the middle of the case cover 11, some of the mounting assemblies 16 may be connected to the outer peripheral side of the case cover 11, and these mounting assemblies 16 connected to the middle of the case cover 11 each may include the support member 161 and the first connecting member 162.

The support member 161 is a support component of the mounting assembly 16. The support member 161 may be, but is not limited to, a support plate or a support beam. The material of the support member 161 may be, but is not limited to, aluminum, aluminum alloy, iron, stainless steel, or copper. The connection method between the support member 161 and the case cover 11 may be, but is not limited to, welding, fastening, or bonding. The number of support members 161 may be one or may be multiple.

The first connecting member 162 is a component configured to connect to the vehicle frame 200. The first connecting member 162 may be, but is not limited to, a bolt, a screw, a rivet, or a hook. The connection method between the first connecting member 162 and the support member 161 may be, but is not limited to, welding or fastening. In some embodiments, each support member 161 is provided with one first connecting member 162, and in some other embodiments, each support member 161 is provided with multiple first connecting members 162.

The adoption of the above technical solution facilitates the connection of the case cover 11 to the vehicle frame 200.

In some embodiments of the present application, referring to FIGs. 4 and 5 together, the cell assembly 20 is connected to a lower portion of the upper wall 112, the support member 161 is connected to the upper wall 112, and the first connecting member 162 connects the support member 161 and the upper wall 112 to the vehicle frame 200.

It can be understood that, under the condition that the case cover 11 is connected to the vehicle frame 200, the upper portion of the upper wall 112 is directly opposite the vehicle frame 200, and the lower portion of the upper wall 112 is directly opposite the guard plate 14.

By adopting the above technical solution, the strength of the upper wall 112 of the case cover 11 is effectively improved, thereby effectively enhancing the load-bearing capacity of the upper wall 112 of the case cover 11 for the cell assembly 20.

In some embodiments of the present application, referring to FIGs. 4 and 5 together, the support member 161 is connected to an upper portion of the upper wall 112 and extends along a width direction of the battery 100.

In this embodiment, the support member 161 has a strip-like structure, for example, the support member 161 may be a strip-shaped support plate, a support beam, and the like, and the length direction of the support member 161 is parallel to the width direction of the battery 100. Under the condition of an external force impact on one side of the battery 100 along the width direction, the impact energy can be transferred from one end of the support member 161 to the other end of the support member 161, effectively reducing the risk of bending of the support member 161.

By adopting the above technical solution, the impact resistance of the upper wall 112 of the case cover 11 in the width direction of the battery 100 is effectively improved, effectively reducing the risk of deformation of the case cover 11 when it is subjected to an external force impact on one side along the width direction of the battery 100, thereby effectively reducing the risk of damage to the cell assembly 20.

In some embodiments of the present application, referring to FIGs. 4 and 5 together, the battery case 10 further includes a constraining structure 17 disposed on the case cover 11, where the constraining structure 17 is configured to constrain swelling of the cell assembly 20.

The constraining structure 17 is a component configured to constrain the swelling of the cell assembly 20. It can be understood that, under the condition of swelling of the cell assembly 20, the swelling force generated by the cell assembly 20 acts on the constraining structure 17, and subsequently, the constraining structure 17 can apply a counterforce to the cell assembly 20, which resists the swelling force of the cell assembly 20, thereby constraining the swelling of the cell assembly 20. The constraining structure 17 may be, but is not limited to, a clamping structure or a pressing structure.

By adopting the above technical solution, under the constraining action of the constraining structure 17, the swelling force of the cell assembly 20 can be resisted, thereby limiting the swelling deformation of the cell assembly 20, and effectively improving the safety performance of the battery 100.

In some embodiments of the present application, referring to FIGs. 4 and 5 together, the constraining structure 17 includes two beam structures 171 spaced apart, where the two beam structures 171 cooperate to clamp the cell assembly 20.

In some embodiments, the two beam structures 171 are parallel to each other and spaced apart, and the cell assembly 20 is placed between the two beam structures 171, so that the two beam structures 171 can cooperate to clamp the cell assembly 20, thereby resisting the swelling force of the cell assembly 20. The material of the beam structures 171 may be, but is not limited to, aluminum, aluminum alloy, iron, stainless steel, or copper. It can be understood that the beam structures 171 may extend along the width direction of the battery 100, in which case the two beam structures 171 are spaced apart along the length direction of the battery 100. Alternatively, the beam structures 171 may extend along the length direction of the battery 100, in which case the two beam structures 171 are spaced apart along the width direction of the battery 100. In some embodiments, the beam structure 171 may be connected to the case cover 11, and the connection method between the beam structure 171 and the case cover 11 may be, but is not limited to, welding, fastening, or bonding. Under the condition that the case cover 11 has the first cavity 111, the beam structure 171 may be disposed in the first cavity 111.

By adopting the above technical solution, under the clamping action of the two beam structures 171, the swelling force of the cell assembly 20 can be resisted, thereby limiting the swelling deformation of the cell assembly 20, and effectively improving the safety performance of the battery 100.

In some embodiments of the present application, referring to FIGs. 4 and 5 together, the beam structure 171 extends along the width direction of the battery 100, and the beam structure 171 is connected to at least one of the upper wall 112 and the side wall 113.

The beam structure 171 extends along the width direction of the battery 100, in other words, the length direction of the beam structure 171 is parallel to the width direction of the battery 100, and the two beam structures 171 may be spaced apart along the length direction of the battery 100.

In some embodiments, the beam structure 171 is connected to the upper wall 112, and the connection method between the beam structure 171 and the upper wall 112 may be, but is not limited to, welding, bonding, or fastening.

In some other embodiments, the beam structure 171 is connected to the side wall 113, where one end of the beam structure 171 is connected to one side wall 113, and another end of the beam structure 171 is connected to another side wall 113. The connection method between the beam structure 171 and the side wall 113 may be, but is not limited to, welding, bonding, or fastening.

In yet some other embodiments, the beam structure 171 is connected to the upper wall 112, and the beam structure 171 is also connected to the side wall 113.

By adopting the above technical solution, the installation operation of the beam structure 171 is facilitated, enabling the two beam structures 171 to more effectively clamp the cell assembly 20. Moreover, the impact resistance of the case cover 11 in the width direction of the battery 100 can be improved, allowing the case cover 11 to effectively withstand the impact force when subjected to an external force impact on one side along the width direction of the battery 100. This effectively reduces the risk of deformation of the case cover 11, thereby effectively reducing the risk of damage to the cell assembly 20.

In some embodiments of the present application, referring to FIGs. 4 and 5 together, the beam structure 171 includes an adapter 1711 and a beam body 1712, where the adapter 1711 includes a matching portion 17111 and an installation portion 17112 connected to each other, the matching portion 17111 is shape-fitted and connected to at least a portion of an inner wall surface of the side wall 113, and the beam body 1712 is connected to the installation portion 17112.

The adapter 1711 is a component configured to connect the case cover 11 and the beam body 1712, the matching portion 17111 is the part connected to the side wall 113 of the case cover 11, and the installation portion 17112 is the part connected to the beam body 1712. The matching portion 17111 being shape-fitted to at least a portion of the inner wall of the side wall 113 means that the shape of the side of the matching portion 17111 facing the side wall 113 matches the shape of at least a portion of the inner wall of the side wall 113. In other words, under the condition that a portion of the inner wall of the side wall 113 has surfaces of different shapes such as convex surfaces, curved surfaces, or corner surfaces, the side of the matching portion 17111 facing the side wall 113 also has corresponding surface structures, where the shape of the surface structure of the side of the matching portion 17111 facing the side wall 113 is the same as the shape of the surface structure of that portion of the inner wall of the side wall 113, and the surface structure of the side of the matching portion 17111 facing the side wall 113 can be complementarily fitted with the surface structure of that portion of the inner wall of the side wall 113, so that the matching portion 17111 can be attached and connected to that portion of the inner wall of the side wall 113. In some embodiments, the adapter 1711 may be an integrally formed component, in other words, the matching portion 17111 and the installation portion 17112 are integrally formed, for example, the adapter 1711 is a stamped part, that is, the matching portion 17111 and the installation portion 17112 are integrally formed by a stamping process, for another example, the adapter 1711 is a cast part, that is, the matching portion 17111 and the installation portion 17112 are integrally formed by a casting process. Under the condition that the adapter 1711 is an integrally formed component, the material of the matching portion 17111 and the material of the installation portion 17112 is the same, in other words, the adapter 1711 may be made of a single material, and the material of the adapter 1711 may be, for example, but is not limited to, aluminum, aluminum alloy, iron, stainless steel, or copper. In some other embodiments, the adapter 1711 may be a separately connected component, in other words, the matching portion 17111 and the installation portion 17112 are separately formed and then connected to each other, for example, the matching portion 17111 and the installation portion 17112 are separately formed by a stamping process and then connected to each other, for another example, the matching portion 17111 and the installation portion 17112 are separately formed by a casting process and then connected to each other. The connection method between the matching portion 17111 and the installation portion 17112 may be, but is not limited to, welding, bonding, or fastening. Under the condition that the adapter 1711 is a separately connected component, the material of the matching portion 17111 and the material of the installation portion 17112 may be the same, in other words, the adapter 1711 may be made of a single material, the material of the adapter 1711 may be, for example, but is not limited to, aluminum, aluminum alloy, iron, stainless steel, or copper, or the material of the matching portion 17111 and the material of the installation portion 17112 may be different, for example, the material of the matching portion 17111 is aluminum alloy, and the material of the installation portion 17112 is stainless steel. The connection method between the matching portion 17111 and the side wall 113 may be, but is not limited to, welding, bonding, or fastening.

The beam body 1712 is a support component of the battery case 10, and the beam body 1712 may be configured to support the case cover 11, for example, the beam body 1712 is configured to support the upper wall 112 of the case cover 11, and the beam body 1712 may also be configured to abut against the cell assembly 20 to constrain the cell assembly 20, for example, the beam body 1712 serves as an swelling beam to resist the swelling force of the cell assembly 20. The beam body 1712 may be a profile component, meaning that the beam body 1712 may be integrally formed by a linear extrusion process. The material of the beam body 1712 may be, but is not limited to, aluminum, aluminum alloy, iron, stainless steel, or copper. The beam body 1712 is connected to the installation portion 17112, and the connection method between the beam body 1712 and the installation portion 17112 may be, but is not limited to, welding, bonding, or fastening.

In the related art, to adapt the shape of the case cover 11 to practical application requirements, the case cover 11 is typically formed by a stamping process, so that the side wall 113 of the case cover 11 can have an irregular shape according to different application needs. However, the beam body 1712 is typically a profile component, meaning that the beam body 1712 is formed by a linear extrusion process, making it difficult for the end shape of the beam body 1712 to match the shape of the side wall 113 of the case cover 11. As a result, the beam body 1712 can only be connected to the upper wall 112 of the case cover 11, but it is difficult to connect two ends of the beam body 1712 to the side wall 113 of the case cover 11, leading to low connection strength between the beam body 1712 and the case cover 11, making the beam body 1712 prone to deformation or displacement under the swelling force of the cell assembly 20 or other external forces, which is not conducive to improving the reliability of the battery 100.

By adopting the above technical solution, since the matching portion 17111 can be connected to at least a portion of the inner wall surface of the side wall 113, and the beam body 1712 is mounted on the installation portion 17112 of the adapter 1711, the beam body 1712 can be connected to the side wall 113 through the adapter 1711, effectively improving the connection strength between the beam body 1712 and the case cover 11, thereby effectively reducing the risk of deformation or displacement of the beam body 1712, and effectively improving the reliability of the battery 100.

It can be understood that the material of the case cover 11, the material of the adapter 1711, and the material of the beam body 1712 may be the same or different.

In some embodiments, referring to FIGs. 4 and 5 together, the material of the case cover 11 and the material of the adapter 1711 are the same, while the material of the beam body 1712 is different from that of the case cover 11, for example, the material of the case cover 11 and the material of the adapter 1711 are steel, and the material of the beam body 1712 is aluminum. The adapter 1711 is welded to the case cover 11, and the beam structure 171 further includes a first fastener 1713, where the beam body 1712 is connected to the installation portion 17112 through the first fastener 1713. The first fastener 1713 may be, but is not limited to, a bolt, a screw, or a rivet.

In the related art, under the condition that the case cover 11 is formed by a stamping process, the thickness of the wall of the case cover 11 is relatively small. To improve the structural strength of the case cover 11, the case cover 11 is typically made of high-strength steel. However, since the beam body 1712 needs to resist the swelling force of the cell assembly 20, the beam body 1712 is typically made of aluminum with a cavity structure. Since steel and aluminum are difficult to weld effectively, it is challenging to effectively connect the beam body 1712 to the case cover 11, resulting in poor connection strength.

By adopting the above technical solution, since the material of the case cover 11 and the material of the adapter 1711 are the same, the adapter 1711 is welded to the case cover 11, while the material of the beam body 1712 is different from that of the case cover 11, and the beam body 1712 is connected to the installation portion 17112 through the first fastener 1713, enabling the beam body 1712 to be connected to the case cover 11 through the adapter 1711, facilitating the assembly of the beam body 1712, effectively improving the connection strength between the beam body 1712 and the case cover 11, thereby effectively reducing the risk of deformation or displacement of the beam body 1712, and effectively improving the reliability of the battery 100.

In some other embodiments, referring to FIGs. 4 and 5 together, the material of the case cover 11 and the material of the adapter 1711 are the same, while the material of the beam body 1712 is different from that of the case cover 11, for example, the material of the case cover 11 and the material of the adapter 1711 are steel, and the material of the beam body 1712 is aluminum. The case cover 11 and the adapter 1711 are stamped parts, meaning that the case cover 11 and the adapter 1711 are formed by a stamping process, and the beam body 1712 is a profile component, meaning that the beam body 1712 is formed by a linear extrusion process. The matching portion 17111 of the adapter 1711 is shape-fitted and welded to at least a portion of the inner wall of the side wall 113 of the case cover 11, and the beam structure 171 further includes a first fastener 1713, where the beam body 1712 is connected to the installation portion 17112 through the first fastener 1713.

By adopting the above technical solution, since the material of the case cover 11 and the material of the adapter 1711 are the same, the matching portion 17111 of the adapter 1711 is shape-fitted and welded to at least a portion of the inner wall of the side wall 113 of the case cover 11, while the material of the beam body 1712 is different from that of the case cover 11, and the beam body 1712 is connected to the installation portion 17112 through the first fastener 1713, enabling the beam body 1712 to be connected to the side wall 113 of the case cover 11 through the adapter 1711, facilitating the assembly of the beam body 1712, effectively improving the connection strength between the beam body 1712 and the case cover 11, thereby effectively reducing the risk of deformation or displacement of the beam body 1712, and effectively improving the reliability of the battery 100.

In yet some other embodiments, the material of the case cover 11, the material of the adapter 1711, and the material of the beam body 1712 are the same, for example, the material of the case cover 11, the material of the adapter 1711, and the material of the beam body 1712 are aluminum, for another example, the material of the case cover 11, the material of the adapter 1711, and the material of the beam body 1712 are steel. The case cover 11 and the adapter 1711 are stamped parts, meaning that the case cover 11 and the adapter 1711 are formed by a stamping process, and the beam body 1712 is a profile component, meaning that the beam body 1712 is formed by a linear extrusion process. The matching portion 17111 of the adapter 1711 is shape-fitted and welded to at least a portion of the inner wall of the side wall 113 of the case cover 11, and the beam body 1712 is welded to the installation portion 17112.

By adopting the above technical solution, since the material of the case cover 11, the material of the adapter 1711, and the material of the beam body 1712 are the same, the matching portion 17111 of the adapter 1711 is shape-fitted and welded to at least a portion of the inner wall of the side wall 113 of the case cover 11, and the beam body 1712 is welded to the installation portion 17112, enabling the beam body 1712 to be connected to the side wall 113 of the case cover 11 through the adapter 1711, facilitating the assembly of the beam body 1712, effectively improving the connection strength between the beam body 1712 and the case cover 11, thereby effectively reducing the risk of deformation or displacement of the beam body 1712, and effectively improving the reliability of the battery 100.

Of course, in other embodiments, the adapter 1711 may not be provided, and the beam body 1712 is directly connected to the case cover 11. For example, the material of the case cover 11 and the material of the beam body 1712 are the same, and the beam body 1712 is directly welded to the case cover 11. For another example, the material of the case cover 11 and the material of the beam body 1712 are different, and the beam body 1712 is connected to the case cover 11 through fasteners.

In some embodiments of the present application, referring to FIG. 4, the adapter 1711 includes a first adapter 1711a and a second adapter 1711b, where the matching portion 17111 of the first adapter 1711a is shape-fitted and connected to at least a portion of an inner wall surface of one side wall 113, the matching portion 17111 of the second adapter 1711b is shape-fitted and connected to at least a portion of an inner wall surface of another side wall 113, one end of the beam body 1712 is connected to the installation portion 17112 of the first adapter 1711a, and another end of the beam body 1712 is connected to the installation portion 17112 of the second adapter 1711b.

By adopting the above technical solution, both ends of the beam body 1712 can be connected to the side wall 113 through the adapters 1711, further improving the connection strength between the beam body 1712 and the case cover 11, thereby further reducing the risk of deformation or displacement of the beam body 1712.

In some embodiments of the present application, referring to FIG. 5, the matching portion 17111 includes a first matching portion 17111a and a second matching portion 17111b, where the first matching portion 17111a is shape-fitted and connected to at least a portion of an inner wall surface of one side wall 113, the second matching portion 17111b is shape-fitted and connected to at least a portion of an inner wall surface of another side wall 113, one end of the installation portion 17112 is connected to the first matching portion 17111a, another end of the installation portion 17112 is connected to the second matching portion 17111b, and the beam body 1712 extends in a direction from the first matching portion 17111a toward the second matching portion 17111b and is connected to the installation portion 17112.

By adopting the above technical solution, one end of the installation portion 17112 can be connected to the side wall 113 through the first matching portion 17111a, and the another end of the installation portion 17112 can be connected to the side wall 113 through the second matching portion 17111b, effectively improving the connection strength between the installation portion 17112 and the case cover 11. Since the beam body 1712 extends in the direction from the first matching portion 17111a toward the second matching portion 17111b, connecting the beam body 1712 to the installation portion 17112 enhances the connection strength between the beam body 1712 and the case cover 11, thereby further reducing the risk of deformation or displacement of the beam body 1712.

In some embodiments of the present application, referring to FIGs. 4 and 5 together, the constraining structure 17 further includes a second connecting member 172, where the second connecting member 172 is connected between two beam structures 171.

The second connecting member 172 is a component configured to connect two adjacent beam structures 171, serving to restrict the relative positions of the two adjacent beam structures 171. For example, under the condition of swelling of the cell assembly 20, the beam structure 171 is subjected to the swelling force of the cell assembly 20, and under this condition, the second connecting member 172 applies a tensile force to the beam structure 171 in a direction opposite to the swelling force of the cell assembly 20, thereby counteracting the swelling force of the cell assembly 20, reducing the risk of deformation or displacement of the beam structure 171. Under the condition that the beam structure 171 includes the adapter 1711 and the beam body 1712, the second connecting member 172 is connected to the beam body 1712. The material of the second connecting member 172 may be, but is not limited to, aluminum, aluminum alloy, iron, stainless steel, or copper. The connection method between the second connecting member 172 and the beam structure 171 may be, but is not limited to, welding, bonding, or fastening. The second connecting member 172 may be, but is not limited to, a limiting strip or a limiting plate.

In some embodiments, referring to FIGs. 4 and 5 together, the constraining structure 17 further includes a second fastener 173, where the second connecting member 172 is connected to the beam structure 171 through the second fastener 173. The second fastener 173 may be, but is not limited to, a bolt, a screw, or a rivet.

In some embodiments, referring to FIGs. 4 and 5 together, under the condition that the second connecting member 172 is a limiting strip, the number of second connecting members 172 may be multiple, and the number of second connecting members 172 may be determined based on actual application needs, for example, the number of second connecting members 172 may be two, three, four, five, six, and the like. The multiple second connecting members 172 are arranged in parallel along the length direction of the beam structure 171, with one end of the second connecting member 172 connected to one beam structure 171, and another end of the second connecting member 172 connected to another beam structure 171.

In some other embodiments, under the condition that the second connecting member 172 is a limiting plate, the limiting plate covers and is connected between two adjacent beam structures 171. In some other embodiments, the second connecting member 172 may also have a cooling channel formed therein, where the cooling channel is configured to provide a flow space for a cooling medium to exchange heat with the cell assembly 20. In other words, in this embodiment, the second connecting member 172 not only serves to restrict the relative positions of two adjacent beam structures 171 but also serves as a heat exchange component for exchanging heat with the cell assembly 20.

By adopting the above technical solution, the relative positions of two adjacent beam structures 171 are effectively restricted, thereby further reducing the risk of deformation or displacement of the beam structures 171.

In some embodiments of the present application, referring to FIGs. 4 and 5 together, the second connecting member 172 is connected to a side of the beam structure 171 facing away from the case cover 11.

It can be understood that, under the condition that the case cover 11 includes the upper wall 112 and the side wall 113, the second connecting member 172 is connected to a side of the beam structure 171 facing away from the upper wall 112.

By adopting the above technical solution, the risk of interference between the second connecting member 172 and the cell assembly 20 is effectively reduced, facilitating the connection of the second connecting member 172 to the beam structure 171.

In some embodiments of the present application, referring to FIG. 3, the battery 100 further includes a second thermal management component 40, where the second thermal management component 40 is attached between two adjacent battery cells 21.

The second thermal management component 40 is a component configured to perform heat exchange with the cell assembly 20. The second thermal management component 40 may be, but is not limited to, a liquid cooling component, an air cooling component, or a metal heat-conducting component.

In some embodiments, the second thermal management component 40 is a liquid cooling plate, where one surface of the second thermal management component 40 is attached to one battery cell 21, and another surface of the second thermal management component 40 may be attached to another battery cell 21. The battery 100 may further include a second inlet pipe and a second outlet pipe, where the second inlet pipe is connected to an inlet of the second thermal management component 40, and the second outlet pipe is connected to an outlet of the second thermal management component 40. Cooling fluid flows through the second inlet pipe of the second thermal management component 40 into a cooling channel of the second thermal management component 40 via the inlet, and then is discharged through the outlet of the second thermal management component 40 along the second outlet pipe, thereby achieving circulation of the cooling fluid within the second thermal management component 40, and effectively exchanging heat with the cell assembly 20.

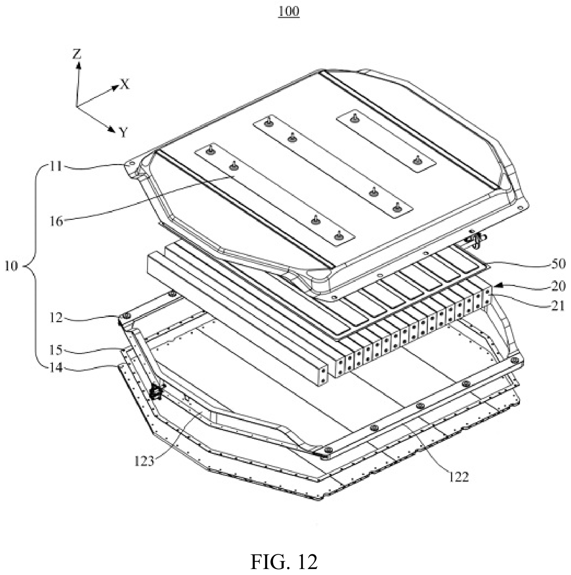

In some embodiments of the present application, referring to FIG. 12, the battery 100 further includes a third thermal management component 50, where the third thermal management component 50 is disposed between the cell assembly 20 and the case cover 11 and attached to the cell assembly 20.

The third thermal management component 50 is a component configured to perform heat exchange with the cell assembly 20. The third thermal management component 50 may be, but is not limited to, a liquid cooling component, an air cooling component, or a metal heat-conducting component.

In some embodiments, the third thermal management component 50 is a liquid cooling plate, where one surface of the third thermal management component 50 is attached to the cell assembly 20, and another surface of the third thermal management component 50 may be attached to the case cover 11 or spaced apart from the case cover 11. The battery 100 may further include a third inlet pipe and a third outlet pipe, where the third inlet pipe is connected to an inlet of the third thermal management component 50, and the third outlet pipe is connected to an outlet of the third thermal management component 50. Cooling fluid flows through the third inlet pipe of the third thermal management component 50 into a cooling channel of the third thermal management component 50, and then is discharged through the outlet of the third thermal management component 50 along the third outlet pipe, thereby achieving circulation of the cooling fluid within the third thermal management component 50, and effectively removing heat from the cell assembly 20.

In still some other embodiments of the present application, the battery 100 may include at least two of the first thermal management component 30, the second thermal management component 40, and the third thermal management component 50. The first thermal management component 30 is disposed between the cell assembly 20 and the guard plate 14 and attached to the cell assembly 20, the second thermal management component 40 is attached between two adjacent battery cells 21, and/or the third thermal management component 50 is disposed between the cell assembly 20 and the case cover 11 and attached to the cell assembly 20. The electrical lead-out is disposed on a portion of the housing other than the portions facing the first thermal management component 30, the second thermal management component 40, and the third thermal management component 50.

By adopting the above technical solution, the heat exchange performance of the battery 100 is effectively improved, thereby effectively enhancing the safety of the battery 100.

In some embodiments of the present application, the cell assembly 20 is bonded to the case cover 11.

In some embodiments, an adhesive layer may be applied on the case cover 11, the cell assembly 20 is placed on the adhesive layer, and after the adhesive layer solidifies, the cell assembly 20 is bonded to the case cover 11.

In some other embodiments, the cell assembly 20 may be placed on the case cover 11, adhesive is poured onto the case cover 11, and after the adhesive layer solidifies, the cell assembly 20 is bonded to the case cover 11.

By adopting the above technical solution, the force between the cell assembly 20 and the case cover 11 can become more uniform, and the assembly process of the cell assembly 20 and the case cover 11 can also be simplified, thereby effectively improving the assembly efficiency of the battery 100.

In some embodiments of the present application, referring to FIGs. 2 to 12 together, the battery case 10 includes a case cover 11, a frame 12, a guard plate 14, a mounting assembly 16, and a constraining structure 17. The case cover 11 and the frame 12 are sequentially connected along the gravity direction of the battery 100, the case cover 11 and the frame 12 are configured to be connected to the vehicle frame 200, and the cell assembly 20 is connected to the case cover 11. The case cover 11 has a first cavity 111, the frame 12 has a second cavity 121, the first cavity 111 and the second cavity 121 are interconnected to form an accommodating cavity 13, a portion of the cell assembly 20 is accommodated in the first cavity 111, and another portion of the cell assembly 20 is accommodated in the second cavity 121. The frame 12 includes a first support beam 122, where the first support beam 122 extends along the length direction of the battery 100 and is located on one side of the battery 100 along the width direction of the battery 100. The first support beam 122 includes a support beam body 1221 and an energy-absorbing beam body 1222, where the energy-absorbing beam body 1222 includes a main beam body 12221 and a first energy-absorbing body 12222, the main beam body 12221 is connected to a side of the support beam body 1221 facing away from the accommodating cavity 13 and has a first energy-absorbing cavity 12223, the first energy-absorbing body 12222 is disposed in the first energy-absorbing cavity 12223, the first energy-absorbing body 12222 is an energy-absorbing rib and extends along the length direction of the main beam body 12221, and the first energy-absorbing body 12222 is connected between two opposite walls of the main beam body 12221. The guard plate 14 covers a side of the frame 12 facing away from the case cover 11, and in the width direction of the battery 100, at least a portion of the energy-absorbing beam body 1222 protrudes beyond the guard plate 14. The guard plate 14 includes a first plate 142, a second plate 143, and a second energy-absorbing body 144, where the first plate 142 and the second plate 143 are spaced apart along the height direction of the battery 100 to form a second energy-absorbing cavity 141, the second energy-absorbing body 144 is disposed in the second energy-absorbing cavity 141, and the second energy-absorbing body 144 extends along the width direction of the battery 100. The second energy-absorbing body 144 is an energy-absorbing rib, the second energy-absorbing body 144 is connected between the first plate 142 and the second plate 143, the thickness direction of the second energy-absorbing body 144 is inclined relative to the height direction of the battery 100, the number of second energy-absorbing bodies 144 is multiple, the multiple second energy-absorbing bodies 144 are arranged in parallel along a direction perpendicular to the length direction of the second energy-absorbing body 144, and the thickness directions of two adjacent second energy-absorbing bodies 144 are inclined in different directions relative to the height direction of the battery 100. The mounting assembly 16 includes a support member 161 and a first connecting member 162, where the support member 161 is connected to a surface of the case cover 11 facing away from the cell assembly 20 and extends along the width direction of the battery 100, and the first connecting member 162 is connected to the support member 161 and configured to be connected to the vehicle frame 200. The constraining structure 17 is disposed in the first cavity 111 and configured to constrain swelling of the cell assembly 20. The constraining structure 17 includes two beam structures 171 spaced apart and a second connecting member 172 connected between the two beam structures 171, where the two beam structures 171 cooperate to clamp the cell assembly 20. The beam structure 171 extends along the width direction of the battery 100, and the beam structure 171 includes an adapter 1711 and a beam body 1712, where the adapter 1711 includes a matching portion 17111 and an installation portion 17112 connected to each other, the matching portion 17111 is shape-fitted and connected to at least a portion of an inner wall surface of the side wall 113, and the beam body 1712 is connected to the installation portion 17112.

According to a second aspect, referring to FIG. 1, an embodiment of the present application provides an electric device including a frame body and the battery 100 described in any one of the above embodiments, where the case cover 11 is connected to the frame body.

It can be understood that under the condition that the electric device is a vehicle 1000, the frame body is the vehicle frame 200 of the vehicle 1000.

As the electric device provided in this embodiment of the present application adopts the battery 100 described in any one of the above embodiments, the range performance of the electric device is effectively improved.

The above are merely preferred embodiments of the present application and are not intended to limit the present application. Any modifications, equivalent substitutions, improvements, and the like made within the spirit and principles of the present application shall be included within the scope of protection of the present application.

## Claims

1. A battery, **characterized in that** the battery comprises:
a battery case comprising a case cover and a frame, wherein the case cover is disposed on the frame and encloses with the frame to form an accommodating cavity, and the case cover is configured to be connected to an external frame body; and
a cell assembly accommodated in the accommodating cavity, wherein the cell assembly is connected to the case cover.

2. The battery according to claim 1, **characterized in that** the case cover has a first cavity, the frame has a second cavity, the first cavity and the second cavity are interconnected to form the accommodating cavity, and at least a portion of the cell assembly is accommodated in the first cavity.

3. The battery according to claim 2, **characterized in that** a maximum depth of the second cavity is less than a maximum depth of the first cavity; and/or a minimum depth of the second cavity is less than a maximum depth of the first cavity.

4. The battery according to any one of claims 1 to 3, **characterized in that** the frame comprises a first support beam, and the first support beam comprises a support beam body and an energy-absorbing beam body, wherein the energy-absorbing beam body is connected to a side of the support beam body facing away from the accommodating cavity.

5. The battery according to claim 4, **characterized in that** the energy-absorbing beam body comprises a main beam body, wherein the main beam body is connected to a side of the support beam body facing away from the accommodating cavity and has a first energy-absorbing cavity.

6. The battery according to claim 5, **characterized in that** the energy-absorbing beam body further comprises a first energy-absorbing body, wherein the first energy-absorbing body is disposed in the first energy-absorbing cavity.

7. The battery according to claim 6, **characterized in that** the first energy-absorbing body is an energy-absorbing rib and extends along a length direction of the main beam body, and the first energy-absorbing body is connected between two opposite walls of the main beam body.

8. The battery according to any one of claims 4 to 7, **characterized in that** the first support beam extends along a length direction of the battery and is located on one side of the battery along a width direction of the battery.

9. The battery according to any one of claims 4 to 8, **characterized in that** the battery case further comprises a guard plate covering a side of the frame facing away from the case cover, wherein the guard plate has a second energy-absorbing cavity.

10. The battery according to claim 9, **characterized in that** the guard plate comprises a first plate, a second plate, and a second energy-absorbing body, wherein the first plate and the second plate are spaced apart along a height direction of the battery to form the second energy-absorbing cavity, and the second energy-absorbing body is disposed in the second energy-absorbing cavity.

11. The battery according to claim 10, **characterized in that** the second energy-absorbing body is an energy-absorbing rib, and the second energy-absorbing body is connected between the first plate and the second plate.

12. The battery according to claim 11, **characterized in that** a thickness direction of the second energy-absorbing body is inclined relative to a height direction of the battery.

13. The battery according to claim 12, **characterized in that** the number of second energy-absorbing bodies is multiple, the multiple second energy-absorbing bodies are arranged in parallel along a direction perpendicular to a length direction of the second energy-absorbing body, and thickness directions of two adjacent second energy-absorbing bodies are inclined in different directions relative to the height direction of the battery.

14. The battery according to any one of claims 11 to 13, **characterized in that** the second energy-absorbing body extends along a width direction of the battery.

15. The battery according to any one of claims 9 to 14, **characterized in that** in a direction perpendicular to a length direction of the first support beam, at least a portion of the energy-absorbing beam body protrudes beyond the guard plate.

16. The battery according to any one of claims 1 to 8, **characterized in that** the battery case further comprises a guard plate, wherein the guard plate covers a side of the frame facing away from the case cover.

17. The battery according to claim 16, **characterized in that** the cell assembly is connected to the guard plate.

18. The battery according to claim 16 or 17, **characterized in that** the battery case further comprises a sealing member, wherein the sealing member is disposed between the frame and the guard plate.

19. The battery according to any one of claims 16 to 18, **characterized in that** the battery further comprises a first thermal management component, wherein the first thermal management component is disposed between the cell assembly and the guard plate and attached to the cell assembly.

20. The battery according to any one of claims 1 to 19, **characterized in that** the frame is configured to be connected to the external frame body.

21. The battery according to any one of claims 1 to 20, **characterized in that** the battery case further comprises a mounting assembly, wherein the case cover is connected to the mounting assembly, and the mounting assembly is configured to be connected to the external frame body.

22. The battery according to claim 21, **characterized in that** at least a portion of the mounting assembly comprises a support member and a first connecting member, wherein the support member is connected to the case cover, and the first connecting member is connected to the support member and configured to be connected to the external frame body.

23. The battery according to claim 22, **characterized in that** the case cover comprises an upper wall, wherein the cell assembly is connected to a lower portion of the upper wall, the support member is connected to the upper wall, and the first connecting member connects the support member and the upper wall to the external frame body.

24. The battery according to claim 23, **characterized in that** the support member is connected to an upper portion of the upper wall and extends along a width direction of the battery.

25. The battery according to any one of claims 1 to 22, **characterized in that** the battery case further comprises a constraining structure disposed on the case cover, wherein the constraining structure is configured to constrain swelling of the cell assembly.

26. The battery according to claim 25, **characterized in that** the constraining structure comprises two beam structures spaced apart, wherein the two beam structures cooperate to clamp the cell assembly.

27. The battery according to claim 26, **characterized in that** the case cover comprises an upper wall and a side wall, wherein the beam structure extends along a width direction of the battery, and the beam structure is connected to at least one of the upper wall and the side wall.

28. The battery according to claim 27, **characterized in that** the beam structure comprises an adapter and a beam body, wherein the adapter comprises a matching portion and an installation portion connected to each other, the matching portion is shape-fitted and connected to at least a portion of an inner wall surface of the side wall, and the beam body is connected to the installation portion.

29. The battery according to claim 26, **characterized in that** the constraining structure further comprises a second connecting member, wherein the second connecting member is connected between the two beam structures.

30. The battery according to claim 29, **characterized in that** the second connecting member is connected to a side of the beam structure facing away from the case cover.

31. The battery according to any one of claims 1 to 30, **characterized in that**
the cell assembly comprises multiple battery cells, and the battery further comprises a second thermal management component, wherein the second thermal management component is attached between two adjacent battery cells, and/or
the battery further comprises a third thermal management component, wherein the third thermal management component is disposed between the cell assembly and the case cover and attached to the cell assembly.

32. The battery according to any one of claims 1 to 31, **characterized in that** the cell assembly is bonded to the case cover.

33. An electric device, **characterized in that** the electric device comprises a frame body and the battery according to any one of claims 1 to 32, wherein the case cover is connected to the frame body.
